# EUROPÄISCHE PATENTSCHRIFT

(11) **EP 3 757 514 B1**
(45) Veröffentlichungstag und Bekanntmachung des Hinweises auf die Patenterteilung: **10.01.2024**
(21) Anmeldenummer: 19182962.1
(22) Anmeldetag: 27.06.2019
(51) Int. Cl.: G01C 15/00, G01S 5/16, G01S 17/66

(54) **RETROREFLEKTOR MIT ROTIERENDEM DETEKTIONSSICHTFELD**
RETROREFLECTOR WITH ROTATING DETECTION VIEW FIELD
RÉTRORÉFLECTEUR POURVU DE CHAMP DE VISION DE DÉTECTION ROTATIF

(43) Veröffentlichungstag der Anmeldung: 30.12.2020
(73) Patentinhaber: Hexagon Technology Center GmbH, 9435 Heerbrugg (CH)
(72) Erfinder: JENSEN, Thomas, 9400 Rorschach (CH); YANG, Zheng, 88046 Friedrichshafen (DE); SCHWENDENER, Andreas, 7000 Chur (CH); BRÜHLMANN, Danick, 9422 Staad (CH)
(74) Vertreter: Kaminski Harmann

(56) Entgegenhaltungen:
- EP-A1- 1 200 853
- DE-A1- 10 321 749
- DE-B3-102012 011 518

## Beschreibung

Die Erfindung betrifft eine Reflektoranordnung vorzugsweise zum Einsatz im Bereich der geodätischen Vermessung, welche eine Bestimmung der eigenen Orientierung relativ zu einem Vermessungsgerät bereitstellt.

Vermessungssysteme zum Bestimmen von Positionen im Geodäsiebereich oder Baustellen- bzw. Konstruktionsbereich sind vielfältig bekannt. Beispiel hierfür sind Systeme aus einem stationären Vermessungsgerät mit Richtungs- und Entfernungsmesser wie z.B. eine Totalstation, und einem einen zu vermessenden oder zu kennzeichnenden Punkt markierenden Messhilfsinstrument wie z.B. ein Lotstab. Eine geodätische Messvorrichtung des Stands der Technik ist beispielsweise in der Veröffentlichungsschrift EP 1 686 350 beschrieben. Auch sind Layout-Systeme bekannt aus einem stationären Laseremitter, welches mittels Laserstrahl eine Positionsreferenz erzeugt, welche von einem Laserreceiver am zu markierenden Punkt empfangbar ist. Es erfolgen also durch das Zusammenspiel eines stationären, bekannt verorteten und damit eine Positionsreferenz bietenden Geräts mit einem empfangenden oder markierenden bzw. anzielbaren Messhilfsmittel Vermessungstätigkeiten, wodurch präzise die Position einzelner Geländepunkte wie Landvermessungspunkte oder Punkte an Baustellenobjekten, z.B. im Innen- oder Aussenbereich von Gebäuden oder im Strassenbau, im Hinblick auf Positionsmessung oder Abstecken bestimmt werden kann.

Bezüglich der Ausgestaltung der Vermessungsgeräte sind zahlreiche unterschiedliche Ausführungsformen bekannt. So verfügen z.B. moderne Totalstationen über Mikroprozessoren zur digitalen Weiterverarbeitung und Speicherung erfasster Messdaten. Die Geräte weisen in der Regel eine kompakte und integrierte Bauweise auf, wobei meist koaxiale Distanzmesselemente sowie Rechen-, Steuer- und Speichereinheiten in einem Gerät vorhanden sind. Abhängig von der Ausbaustufe der Totalstation können zudem eine Motorisierung der Anziel- bzw. Visiereinrichtung sowie - im Fall der Verwendung von Retroreflektoren (etwa eines Rundum-Prismas) als Ziel-Objekte - Mittel zur automatischen Zielsuche und -verfolgung integriert sein. Als Mensch-Maschine-Schnittstelle kann die Totalstation eine elektronische Anzeige-Steuereinheit - im Allgemeinen eine Mikroprozessor-Recheneinheit mit elektronischen Datenspeichermitteln - mit Display und Eingabemitteln, z.B. einer Tastatur, aufweisen. Der Anzeige-Steuereinheit werden die elektrosensorisch erfassten Messdaten zugeführt, sodass die Position des Zielpunkts durch die Anzeige-Steuereinheit ermittelbar, optisch anzeigbar und speicherbar ist. Aus dem Stand der Technik bekannte Totalstationen können des Weiteren über eine Funkdatenschnittstelle verfügen zum Aufbau einer Funkverbindung zu externen Peripheriekomponenten wie z.B. zu dem Messhilfsinstrument oder zu einem handhaltbaren Datenerfassungsgerät, welches insbesondere als Datenlogger oder Feldrechner ausgebildet sein kann.

Zum Anvisieren bzw. Anzielen des zu vermessenden Zielpunkts weisen gattungsgemässe geodätische Vermessungsgeräte ein Zielfernrohr, wie z.B. ein optisches Teleskop, als Visiereinrichtung auf. Das Zielfernrohr ist im Allgemeinen um eine vertikale Stehachse und um eine horizontale Kippachse relativ zu einer Basis des Messgeräts drehbar, sodass das Fernrohr durch Schwenken und Kippen auf den zu vermessenden Punkt ausgerichtet werden kann. Moderne Geräte können additiv zum optischen Sichtkanal eine in das Zielfernrohr integrierte und beispielsweise koaxial oder parallel ausgerichtete Kamera zur Erfassung eines Bildes aufweisen, wobei das erfasste Bild insbesondere als Live-Bild auf dem Display der Anzeige-Steuereinheit und/oder auf einem Display des zur Fernsteuerung verwendeten Peripheriegeräts - wie z.B. des Datenloggers - dargestellt werden kann.

Gängige Vermessungsgeräte weisen inzwischen standardmässig eine automatische Zielverfolgungs-Funktion für als Ziel-Reflektor dienende Prismen (ATR: "Automatic Target Recognition") auf. Dafür sind beispielsweise eine weitere separate ATR-Lichtquelle und ein spezieller, für diese Wellenlänge sensitiver ATR-Detektor (z.B. CCD-Flächensensor) zusätzlich im Teleskop integriert.

In vielen geodätischen Anwendungen erfolgt eine Vermessung von Punkten indem speziell ausgestaltete Messhilfsinstrumente bzw. Zielobjekte (z.B. Vermessungsstäbe) am Zielpunkt platziert werden. Diese bestehen meist aus einem Lotstock mit einem Reflektor (z.B. einem Rundum-Prisma) zur Definition der Messtrecke bzw. des Messpunktes. Bei solchen Vermessungsaufgaben werden typischerweise zur Steuerung des Messvorgangs sowie zur Festlegung oder Registrierung von Messparametern Daten, Anweisungen, Sprache und weiteren Informationen zwischen Zielobjekt und zentralem Messgerät übertragen. Beispiele für solche Daten sind Identifikationsinformation für das Zielobjekt (z.B. Art des verwendeten Prismas), Neigung des Lotstocks, Höhe des Reflektors über Grund, Reflektorkonstanten oder Messwerte wie Temperatur oder Luftdruck. Diese Informationen bzw. situationsbedingten Parameter sind erforderlich, um eine hochpräzise Anzielung und Vermessung des durch den Lotstab mit Prisma definierten Messpunktes zu ermöglichen.

Zusätzlich ist eine Bestimmung der räumlichen Orientierung bzw. einer Neigung bezüglich jeweils relevanter Raumrichtungen des jeweiligen Hilfsinstruments erforderlich oder definiert einzustellen (z.B. lotrecht), um zusammen mit der bestimmten Position des am Hilfsinstrument angeordneten Reflektors den mittels des Instruments zu bestimmenden Messpunkt abzuleiten. Eine solche Orientierung kann beispielsweise mittels eines Neigungssensors, welcher in einer bestimmten Position und Lage relativ zu dem Reflektor vorgesehen ist, bestimmt werden.

Der Einsatz von Neigungssensoren erlaubt eine einfache Lagebestimmung in zwei rotatorischen Freiheitsgraden. Hierdurch kann ein Rollen und ein Nicken (engl.: roll, pitch) des Messhilfsinstruments, also eine jeweilige Rotation um eine horizontale Achse, bestimmt werden. Eine solche Lösung ist z.B. aus der DE 10 2012 011518 B3 bekannt. Technisch komplexer gestaltet sich jedoch die Bestimmung einer dritten Raumrichtung, einer Rotation um eine Vertikalachse, wie z.B. der Lotstock-Längsachse, das sogenannte Gieren (engl.: yaw) des Messhilfsinstruments.

Hierfür sind aus dem Stand der Technik Lösungen mittels zusätzlicher Vorrichtungen seitens des Messhilfsinstruments bekannt. Die jeweilige Vorrichtung wird dabei z.B. von Seiten der Totalstation etc. beleuchtet und anhand eines Einfallswinkels oder einer Abbildung eines Codes kann auch auf den Gierwinkel rückgeschlossen werden. Solche Lösungen sind z.B. aus der EP 2 916 104 A1 bekannt.

Eine andere bekannte Lösung gemäss der DE 103 21 749 A1 verwendet jeweils einen Sensor am Messgerät und am Messhilfsinstrument zur Bestimmung einer relativen Orientierung dieser beider Komponenten.

Nachteilig bei derartigen Lösungen ist, dass zusätzlich zum typischerweise vorhandenen Reflektor mindestens eine weitere Komponente am Messhilfsinstrument vorgesehen ist und dadurch eine erhöhte Komplexität bezüglich der Ausgestaltung solcher Instrumente gegeben ist und/oder die Instrumente eine relative grosse räumliche Ausdehnung aufweisen. Zudem gelingt eine Bestimmung der Ausrichtung insbesondere hinsichtlich des Einsatzes von Neigungssensoren nur im Rahmen der jeweiligen limitierten Sensorgenauigkeit. Des Weiteren bergen die zusätzlichen Komponenten jeweils zusätzliche Fehlerquellen hinsichtlich der Positions- und Orientierungsbestimmung (z.B. führt ein durch eine mechanische Beanspruchung nicht bestimmter Winkelversatz des Neigungssensors relativ zum Reflektor zu geringerer Genauigkeit bzw. verfälschten Werten).

Auch eine Lösung gemäss der EP 1 200 853, wobei ein Prisma eine kleine Durchtrittsöffnung für den Messstrahl aufweist und dieser teilweise direkt auf einen Sensor trifft (ähnlich wie bei der Abbildung einer Lochbildkamera), weist hinsichtlich erreichbarer Genauigkeiten erhebliche Nachteile auf. Eine präzise Bestimmung der Position der Strahlung auf dem Sensor ist nur stark bedingt gegeben, da diese Bestimmungsgenauigkeit massgeblich von der Messdistanz, der Strahlqualität und den Umweltbedingungen (Nebel, Regen, Staub etc.) abhängt. Leichte Verschmutzungen, z.B. auch in Form eines Fingerabdrucks an der Prismenaussenfläche, können zu einer asymmetrischen Abbildung oder Ablage der durch die kleine Öffnung transmittierten Strahlung auf dem Sensor und damit bei der Auswertung z.B. über eine schwellwertbasierte Schwerpunktbestimmung, zu einem Messfehler führen. Da nur ein einziger sehr kleiner Spot ausgewertet wird, sind entsprechende Fehlereinflüsse praktisch nicht detektierbar und führen zu einer stark eingeschränkten Robustheit für Messungen im Aussenbereich. Auch können bei einer Distanzmessung zu dieser Einheit aufgrund strukturell bedingter, reflektorinterner Reflexionen erhebliche Messfehler bei der Distanzbestimmung zu dieser Einheit auftreten.

Eine Aufgabe der vorliegenden Erfindung ist es daher, eine verbesserte, kompakte Vorrichtung bereitzustellen, welche eine zuverlässigere und genauere Orientierungsbestimmung, insbesondere mit bis zu drei Freiheitsgraden (drei rotatorische Freiheitsgrade), für Vermessungszwecke ermöglicht.

Insbesondere soll eine zuverlässigere und genauere Lagebestimmung in bis zu sechs Freiheitsgraden, in drei Translations- und in drei Rotationsfreiheitsgraden, bereitgestellt werden.

Diese Aufgabe wird durch die Verwirklichung der Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung beruht auf der Idee der einfallswinkelkorrelierten Detektion von in einen Reflektor eintretender elektromagnetischer Strahlung.

Die Erfindung betrifft eine Reflektoranordnung zur Positionsbestimmung und/oder Markierung von Zielpunkten, insbesondere für die industrielle bzw. geodätische Vermessung. Die Reflektoranordnung weist einen Retroreflektor auf, der eine Positionsbestimmung für die Reflektoranordnung mittels paralleler, insbesondere koaxialer, Messstrahlreflexion bereitstellt und eine Durchtrittsfläche für zumindest einen Teil von in den Retroreflektor eintretender Messstrahlung als Orientierungsmessstrahlung bereitstellt. Zudem stellt der Retroreflektor ein Reflektorsichtfeld mit einem ersten Öffnungswinkel um eine Gierachse und einem zweiten Öffnungswinkel um eine orthogonal zu der Gierachse stehende Nickachse bereit.

Als Retroreflektor werden in der geodätischen Vermessung typischerweise Tripelprismen oder Tripelspiegel verwendet, die eine entsprechende parallele Strahlreflexion bereitstellen. Wird der Reflektor mit einem Vermessungsgerät angezielt, so wird die Messstrahlung zum Vermessungsgerät zurück reflektiert und anhand des so am Vermessungsgerät erfassbaren Signals kann eine Entfernung zum Reflektor bestimmt werden, z.B. mittels Laufzeitberechnung. Ein Teil, insbesondere ein verhältnismässig sehr kleiner Teil des gesamten Messstrahlungsquerschnitts, kann durch den Reflektor hindurchtreten und wird nicht zurück reflektiert. Die hierzu vorgesehene Durchtrittsfläche kann z.B. durch abtrennen einer Ecke eines Tripelprismas erzeugt sein.

Die Reflektoranordnung weist weiter eine Strahldetektionseinheit auf, mittels welcher die durch den Retroreflektor durchtretende Orientierungsmessstrahlung erfassbar ist. Die Strahldetektionseinheit ist bezüglich der Einfallsrichtung der Messstrahlung in die Reflektoranordnung dem Retroreflektor nachgeordnet.

Eine räumliche Orientierung der Reflektoranordnung ist anhand einer Orientierung eines durch zumindest die Gierachse und die Nickachse definierten körpereigenen Koordinatensystems relativ zu einem externen Koordinatensystem zumindest anhand eines relativen Gierwinkels zumindest teilweise definierbar, insbesondere zudem anhand eines Rollwinkels und eines Nickwinkels definierbar, wobei der Gierwinkel eine rotatorische Ausrichtung des Reflektoranordnung um die Gierachse angibt. Die rotatorische Ausrichtung der Reflektoranordnung ist insbesondere bezüglich eines Referenzpunkts (z.B. Aufstellposition einer Vermessungseinheit) oder einer Referenzachse (z.B. Ausbreitungsachse eines Messlaserstrahls) bestimmbar.

Ferner weist die Strahldetektionseinheit einen ersten Sensor zur Erzeugung eines Signals in Abhängigkeit einer Erfassung von Orientierungsmessstrahlung und eine erste Strahlführungseinheit auf, wobei der erste Sensor und die erste Strahlführungseinheit derart angeordnet sind, dass durch ein Zusammenwirken der Strahlführungseinheit und dem Sensor ein Detektionssichtfeld zur Erfassung der Orientierungsmessstrahlung definiert ist, das einen Öffnungswinkel um die Gierachse aufweist, welcher kleiner als der erste Öffnungswinkel des Reflektorsichtfeldes ist, eine Ausrichtung des Detektionssichtfelds um die Gierachse mittels eines Schwenkens oder Rotierens der Strahlführungseinheit um die Gierachse variierbar ist und durch den Retroreflektor durchtretende Orientierungsmessstrahlung in Abhängigkeit der Ausrichtung des Detektionssichtfelds mit dem ersten Sensor erfassbar ist.

In einer Ausführungsform ist die Strahldetektionseinheit (Sensor mit Strahlführungseinheit) um die Gierachse drehbar gelagert.

Bezüglich der Ausgestaltung der ersten Strahlführungseinheit kann diese gemäss einer bestimmten Ausführungsform zumindest einen Strahldurchtritt aufweisen, welcher Strahldurchtritt als längliche Apertur ausgeführt ist, insbesondere sich parallel zur Gierachse erstreckend angeordnet und/oder schlitzförmig ausgeformt ist. Der Strahldurchtritt kann z.B. als Ausnehmung, insbesondere als Schlitz, in einer Zylinderwand eines Hohlzylinders (mit einer kreisrunden Grundfläche) zur Bereitstellung einer Strahltransmission ausgeführt sein, wobei ein Mittelpunkt des Hohlzylinders auf der Gierachse liegt oder eine Zylinderachse des Hohlzylinders mit der Gierachse koaxial ausgerichtet ist.

Mittels der Ausnehmung kann eine Transmission von eintretender Messstrahlung bezüglich des Detektionssichtfeldes räumlich definiert bzw. limitiert werden. Eine Detektion von Strahlung mit dem Sensor wird nur dann möglich, wenn die Strahlung den durch die Ausnehmung begrenzten Transmissionsbereich passiert. Eine solche Übereinstimmung kann durch entsprechende Winkelstellung der Strahlführungseinheit um die Rotationsachse erreicht werden.

Der Strahldurchtritt, insbesondere die Ausnehmung, kann insbesondere länglich ausgeformt sein, wobei diese insbesondere parallel zur Gierachse ausgerichtete ist. Bei einer solchen Ausrichtung bestimmt die Länge der Ausnehmung einen Messbereich in Nickrichtung.

Die Reflektoranordnung, insbesondere die erste Strahlführungseinheit oder der Strahldurchtritt, kann ferner mindestens ein optisches Element zur Fokussierung der Orientierungsmessstrahlung aufweisen, insbesondere eine Linse, z.B. eine Zylinderlinse oder sphärische Linse, und/oder eine Apertur. Der Strahldurchtritt kann z.B. eine Zylinderlinse aufweisen, wodurch eintretende Strahlung hauptsächlich in einer Richtung hin zur Gierachse, d.h. zu einer Linie, fokussiert werden kann.

In einer bestimmten Ausführungsform kann die Reflektoranordnung, insbesondere die erste Strahlführungseinheit, ein zur Umlenkung und/oder Fokussierung der durch die Durchtrittsfläche, insbesondere durch den Strahldurchtritt, tretenden Strahlung auf den Sensor ausgebildetes und angeordnetes Strahlumlenkmittel aufweisen, insbesondere einen Spiegel, ein Prisma oder einen Körper mit einer gekrümmten, reflektierenden Oberfläche, insbesondere einer Freiformoberfläche dritter Ordnung.

Der erste Sensor der Strahldetektionseinheit kann gemäss einer Ausführungsform zur Erzeugung des Signals in Abhängigkeit von einer Detektion der Orientierungsmessstrahlung und/oder in Abhängigkeit von einer Intensität von auf den Sensor auftreffender Orientierungsmessstrahlung ausgebildet sein. Der Sensor (und dessen Steuerung) kann also allein zur Registrierung eines Strahleintritts und/oder zur Bestimmung einer Intensität dieser Strahlung eingerichtet sein.

Insbesondere ist der Sensor als photosensitiver Sensor, insbesondere als Photodiode, beispielsweise als PIN-Diode, APD oder PSD (position sensitive detector), ausgebildet. Alternativ kann der Sensor als CMOS oder CCD ausgebildet und/oder zur Bilderfassung eingerichtet sein. Weiter kann der Sensor als photosensitive Fläche ausgestaltet sein und die Bestimmung eines Auftreffpunkts oder -bereichs der Strahlung z.B. mittels Schwerpunktbestimmung zugänglich machen.

Dem Sensor kann zudem ein Filter vorgeordnet sein. Dieses Filter kann derart wellenlängenselektiv ausgebildet und angepasst sein, dass Messstrahlung eines geodätischen Vermessungsgeräts den Sensor erreicht, störende Umgebungsstrahlung oder Störreflexe jedoch herausgefiltert werden. Das Filter kann beispielsweise Teil der Strahldetektionseinheit, insbesondere der Strahlführungseinheit, sein.

Erfindungsgemäß definiert die erste Strahlführungseinheit eine Rotationsachse, wobei die Strahlführungseinheit zur Variation der Ausrichtung des Detektionssichtfelds drehbar um die Rotationsachse gelagert ist und ein rotationswinkelabhängiges, insbesondere rotationswinkelselektives, Erfassen der Orientierungsmessstrahlung bereitstellt.

Die Reflektoranordnung weist insbesondere eine Antriebseinheit auf, die ein gesteuertes Schwenken und/oder Rotieren der Strahlführungseinheit um die Rotationsachse oder die Gierachse bereitstellt.

Insbesondere kann die Reflektoranordnung eine Encodereinheit, insbesondere einen Winkelencoder, aufweisen, die zur Erfassung der Ausrichtung des Detektionssichtfeldes ausgebildet ist, insbesondere zur Erfassung eines die Ausrichtung angebenden Encoderwinkels. Die Encodereinheit kann insbesondere mit der Strahlführungseinheit, der Antriebseinheit oder der Rotationsachse gekoppelt sein.

Die Ausrichtung des Detektionssichtfeldes ist mit dieser Ausführung insbesondere bezüglich eines Gierwinkels um die Gierachse bestimmbar.

Gemäss einer Ausführungsform kann die Reflektoranordnung eine Auswerteeinheit aufweisen, die zur Ableitung einer räumlichen Orientierung der Reflektoranordnung relativ zu der in den Retroreflektor eintretenden Messstrahlung bezüglich zumindest eines Freiheitsgrads anhand der Ausrichtung der Strahlführungseinheit eingerichtet ist, insbesondere wobei ein Gierwinkel relativ zu einer Ausbreitungsachse der eintretenden Strahlung bestimmbar ist. Insbesondere verfügt die Auswerteeinheit über eine Auswertefunktionalität, die derart konfiguriert ist, dass bei deren Ausführung die Ableitung der räumlichen Orientierung der Reflektoranordnung relativ zu der in den Retroreflektor eintretenden Messstrahlung anhand der Ausrichtung der Strahlführungseinheit erfolgt.

Gemäss einer bestimmten Ausführungsform der Erfindung ist die Auswerteeinheit derart eingerichtet, dass diese zur Bestimmung der Ausrichtung des Detektionssichtfeldes in Abhängigkeit von zumindest einem ersten Signal von dem ersten Sensor ausgebildet ist. Die Auswerteeinheit kann ausserdem zum Erhalt und zur Verarbeitung eines Encodersignals ausgebildet sein.

Die Auswerteeinheit kann insbesondere derart konfiguriert sein, dass ein intensitätsabhängiger Signalverlauf erfassbar ist und bei einer Rotation der ersten Strahlführungseinheit eine Signalintensität in Abhängigkeit einer jeweiligen Gierausrichtung der ersten Strahlführungseinheit, insbesondere in Abhängigkeit jeweiliger Encodersignale, insbesondere Winkelinformation, bestimmbar und speicherbar ist.

Die Auswerteeinheit ist insbesondere derart konfiguriert, dass der Gierwinkel in Abhängigkeit der Bestimmung der Ausrichtung des Detektionssichtfeldes ableitbar ist, insbesondere wobei der Gierwinkel mittels Signalauswertung des Sensorsignals, insbesondere mittels Auswertung des Intensitätsverlaufs, bestimmbar ist.

Anhand der Feststellung in welcher Rotationsausrichtung um die Gier- bzw. Rotationsachse sich die erste Strahlführungseinheit bei erfolgender Strahldetektion befindet kann auf den Einfallswinkel der detektierten Messstrahlung rückgeschlossen werden. Die Rotationsausrichtung korrespondiert mit der Ausrichtung des Detektionssichtfeldes.

Eine erfindungsgemässe Reflektoranordnung stellt eine zumindest teilweise Bestimmung der räumlichen Orientierung insbesondere bezüglich einer Gierbewegung, d.h. einer Rotation der Reflektoranordnung um die zentrale Rotationsachse (Gierachse), bereit. Die beiden anderen rotatorischen Freiheitsgrade, Roll- und Nickwinkel, können z.B. mittels Gravitationsneigungsmesser oder (teilweise) ebenfalls anhand der Reflektoranordnung bestimmt werden. Zur Bestimmung der Orientierung in allen drei Rotationsfreiheitsgraden werden die hierzu erfassten Messdaten vorzugsweise gemeinsam verarbeitet. Werden z.B. Roll- und Nicklage mittels eines Neigungssensors bestimmt, kann die azimutale Orientierung des Messstabes zur Totalstation eindeutig berechnet werden.

Die Messung des Gierens (yaw) ist gerätefest, d.h. die Messung erfolgt um eine feste Gierachse. Ein Neigungssensor (Inklinometer) misst relativ zur Gravitation. Wenn ein Messstab also zumindest im Wesentlichen vertikal steht, erfolgt ein Gieren entsprechend parallel zum Azimut, und alle drei Raumwinkel können einfach bestimmt werden.

Hinsichtlich der Ausgestaltung der Reflektoranordnung kann in einer Ausführungsform der Retroreflektor als Prisma, insbesondere Tripelprisma, insbesondere verspiegelt, ausgebildet sein, wobei das Prisma eine ein Polygon, insbesondere Dreieck, bildende Lichteintrittsfläche und die der Lichteintrittsfläche gegenüberliegende Durchtrittsfläche als Apertur aufweist.

Die Durchtrittsfläche kann insbesondere an einer Ecke des Prismas gebildet sein, insbesondere wobei die Durchtrittsfläche durch eine ausgesparte Ecke des Prismas gebildet ist und ebenfalls ein Polygon, insbesondere Dreieck, definiert. Der Retroreflektor kann insbesondere eine optische Achse definieren, wobei die optische Achse orthogonal zur Durchtrittsfläche verläuft und insbesondere den Mittelpunkt der Durchtrittsfläche schneidet.

Gemäss einer weiteren Ausführungsform kann die Reflektoranordnung als 360°-Retroreflektor mit einer Mehrzahl, insbesondere mit sechs, aneinander angrenzend angeordneter und als Prismen ausgebildeter Retroreflektoren ausgebildet sein.

Die Prismen sind ringförmig angeordnet, bilden insbesondere einen Ring, und der 360°-Retroreflektor definiert ein Gesamtsichtfeld um die Gierachse von 360°.

Die optischen Achsen zumindest zweier, insbesondere dreier, Prismen weisen insbesondere einen gemeinsamen Schnittpunkt mit der Gierachse auf.

Die Orientierungsbestimmung mit einer erfindungsgemässen Reflektoranordnung erfolgt anhand und relativ zur Ausbreitungsachse der auf die Anordnung auftreffenden Messstrahlung, z.B. emittiert seitens einer Totalstation. Die Messstrahlung tritt dann teilweise durch eines der Prismen hindurch, wird durch die Strahlführungseinheit (und mittels der optischen Baugruppe) auf den Sensor umgelenkt und fokussiert. Bei Detektion der Strahlung, wird eine Messgrösse bezüglich eines aktuellen Rotationswinkels der Strahlführungseinheit erfasst.

Ebenfalls ist die Unterstützung durch Inertialsensoren (IMU) möglich, um die Messstabilität im Fall einer Messstrahlunterbrechung weiter zu erhöhen.

Aufgrund der Ausgestaltung der Reflektoranordnung korreliert die Winkelstellung der Strahlführungseinheit bei Strahldetektion mit dem Einfallswinkel der Strahlung in das Prisma. Der Azimut der Reflektoranordnung bezüglich der Ausbreitungsachse der Messstrahlung kann damit anhand der Winkelstellung abgeleitet werden.

Wird die Reflektoranordnung um die Rotationsachse rotiert, verändert sich der Einfallswinkel. Verlässt die Messstrahlung dabei das Sichtfeld eines Prismas und tritt in das Sichtfeld eines benachbarten Prismas ein, so trifft die Messstrahlung nicht länger auf den bisherigen Sensor, sondern wird auf den gegenüberliegenden Sensor gelenkt.

In einer bestimmten Ausführungsform kann die Mehrzahl der Retroreflektoren derart angeordnet sein, dass die Reflektoranordnung eine zentrale Auslassung aufweist, wobei die Gierachse sich zentral durch die Auslassung erstreckt, dass die erste Strahldetektionseinheit in der Auslassung angeordnet ist und dass die erste Strahldetektionseinheit zur einfallswinkelabhängigen Erfassung der durch eine beliebige der Durchtrittsflächen der Retroreflektoren durchtretenden Orientierungsmessstrahlung über das Gesamtsichtfeld von 360° ausgebildet ist.

Die Strahlführungseinheit ist hierbei insbesondere innerhalb der Ausnehmung relativ zu den Reflektoren um die Gierachse rotierbar.

Gemäss einer bestimmten Ausführungsform der Erfindung weist die Strahldetektionseinheit eine zweite Strahlführungseinheit und einen zweiten Sensor auf, wobei die erste Strahlführungseinheit einer ersten Prismengruppe und die zweite Strahlführungseinheit einer zweiten Prismengruppe zugeordnet ist, insbesondere wobei die erste und die zweite Prismengruppe jeweils drei Prismen aufweist und/oder die erste und die zweite Strahlführungseinheit in der Auslassung angeordnet sind.

In anderen Worten kann mit einer derartigen Ausführung eine Aufteilung der Erfassung des Gesamtsichtfeldes auf zwei Sensoren erfolgen. Jede der Strahlführungseinheiten ist so für eine partielle Erfassung des Gesamtsichtfeldes, beispielsweise jeweils 180° azimutal, eingerichtet. Die Erfassbarkeit des Raumwinkels von 180° muss jedoch nicht zusammenhängend erfolgen, sondern kann vielmehr in wiederum unterteilten und nicht zusammenhängenden Sektoren erfolgen.

Im Besonderen können die erste Prismengruppe und die erste Strahlführungseinheit eine Erfassung der durch die erste Prismengruppe bereitstellbaren und mittels der ersten Strahlführungseinheit auf den ersten Sensor projizierbaren (umlenkbaren) Orientierungsmessstrahlung durch den ersten Sensor bereitstellen. Die zweite Prismengruppe und die zweite Strahlführungseinheit können entsprechend eine Erfassung der durch die zweite Prismengruppe bereitstellbaren und mittels der zweiten Strahlführungseinheit auf den zweiten Sensor projizierbaren Orientierungsmessstrahlung durch den zweiten Sensor bereitstellen. Eine optische Achse des ersten und eine optische Achse des zweiten Sensors sind insbesondere parallel oder koaxial ausgerichtet und die jeweiligen Erfassungsrichtungen des ersten und des zweiten Sensors sind entgegengesetzt.

In einer Ausführung liegen die Mittelpunkte der Durchtrittsflächen der Prismen der ersten Prismengruppe in einer ersten Ebene und die Mittelpunkte der Durchtrittsflächen der Prismen der zweiten Prismengruppe in einer zweiten Ebene. Die erste Ebene und die zweite Ebene sind insbesondere parallel zueinander ausgerichtet und weisen einen bestimmten Abstand auf, insbesondere wobei die Ebenen im Wesentlichen orthogonal zu der Gierachse ausgerichtet sind.

Die Prismen einer jeweiligen Prismengruppe sind mit Bezug zu einer Position entlang der Gierachse versetzt zu den Prismen einer jeweiligen anderen Prismengruppe angeordnet.

In einer Ausführung können Prismen der ersten Prismengruppe und Prismen der zweiten Prismengruppe relativ zu einer orthogonal zur Gierachse ausgerichteten Ebene entgegengesetzt, insbesondere betragsmässig gleich, verkippt sein. Die Ausrichtung der jeweiligen Sichtfelder ist entsprechend ebenfalls verkippt, jedoch vorzugsweise so gewählt, dass ein hinreichend grosser Überlappungsbereich und damit ein geeignetes Gesamtsichtfeld für eine 360°-Erfassung resultiert.

In einer weiteren spezifischen Ausführungsform kann die Strahldetektionseinheit eine zweite Strahlführungseinheit und einen zweiten Sensor aufweisen, wobei sowohl die erste als auch die zweite Strahlführungseinheit zur einfallswinkelabhängigen Erfassung der durch eine beliebige der Durchtrittsflächen der Retroreflektoren durchtretenden Orientierungsmessstrahlung über das Gesamtsichtfeld von 360° angeordnet und ausgebildet ist.

Die erste und die zweite Strahlführungseinheit weist hierbei jeweils ein Strahlumlenkmittel (z.B. Freiformspiegel) und jeweils einen schlitzförmigen Strahldurchtritt (z.B. Schlitzblende) auf. Sowohl das erste und das zweite Strahlumlenkmittel als auch der erste und der zweite schlitzförmige Strahldurchtritt sind mit einem Gierabstand von jeweils 180° relativ zueinander angeordnet und ausgerichtet. In anderen Worten, sind diese Elemente jeweils gegenüberliegend (bezüglich der Gierachse) angeordnet.

Zur Bereitstellung der Erfassung nicht nur des Gierwinkels sondern auch des Nickwinkels weist diese Anordnung eine Verkippung der obigen Elemente auf.

Eine durch den jeweiligen schlitzförmigen Strahldurchtritt definierte Schlitzerstreckungsachse ist um eine zu einer Rollachse parallelen oder koaxialen Achse bezüglich der Gierachse um einen bestimmten Winkel verkippt, insbesondere um einen Winkel aus einem Winkelbereich von 30° bis 60°, insbesondere um 45° verkippt. Die Rollachse ist orthogonal sowohl zur Gierachse als auch zur Nickachse ausgerichtet.

Zudem ist eine bei einer Projektion des jeweiligen Strahlumlenkmittels auf eine durch die Gierachse und die Nickachse definierte Ebene resultierende Ausrichtung des Strahlumlenkmittels um die zur Rollachse parallele oder koaxiale Achse bezüglich der Gierachse ebenfalls verkippt, insbesondere um einen Winkel aus einem Winkelbereich von 30° bis 60°, insbesondere um 45°.

Die Verkippungen des ersten Strahldurchtritts und des ersten Strahlumlenkmittels sind betrags- und richtungsmässig gleich. Die Verkippungen des zweiten Strahldurchtritts und des zweiten Strahlumlenkmittels sind ebenfalls betrags- und richtungsmässig gleich.

Insbesondere sind die Verkippungen des ersten und zweiten Strahldurchtritts sowie des ersten und zweiten Strahlumlenkmittels zumindest richtungsmässig um die zur Rollachse parallele oder koaxiale Achse gleich.

Ein Nickwinkel kann hier anhand eines zeitlichen oder rotationswinkelbezogenen Abstands zweier Messsignalerfassungen bei einer Rotation der Strahlführungseinheit von weniger als 360° abgeleitet werden. Dies wird insbesondere durch die Verkippungen und die damit bereitgestellte Abweichung in der Signalerfassung erreicht.

Die Erfindung betrifft weiter ein Messhilfsinstrument, insbesondere einen Lotstab, Vermessungsstab oder Tastwerkzeug, mit einer Reflektoranordnung wie oben beschrieben, wobei das Messhilfsinstrument zur kontaktlosen oder taktilen Erfassung eines Zielpunkts an einem Objekt mit definiertem Positionsbezug zu der Reflektoranordnung ausgebildet ist. Mittels der Reflektoranordnung kann die Position und Orientierung des Messhilfsinstruments in bis zu sechs Freiheitsgraden eindeutig bestimmt werden. Die Reflektoranordnung wird dabei insbesondere zur Bestimmung des Azimuts (Gierwinkel) relativ zur Sichtlinie zwischen Vermessungsgerät und Messhilfsinstrument eingesetzt

Durch die Vorsehung eines Sensors am Messstab und die Erfassung von charakteristischer Messstrahlung einer Totalstation etc. kann der Messstab als aktives Hilfsmittel ausgebildet sein. Hierzu kann der Messstab eine Sendeeinheit aufweisen und zur Übermittlung von Information ausgebildet sein. Z.B. kann der Messstab ein Signal auf Antwort einer Detektion eines Suchstrahls erzeugen und der Totalstation dadurch mitteilen, dass die Strahlung dann den Reflektor trifft (Suchvorgang zum Auffinden eines geodätischen Ziels). Zudem kann eine ID für das bestimmte Ziel übertragen werden und damit angezeigt werden, welches Ziel gefunden wurde oder aktuell angezielt wird.

In anderer Richtung kann auch Information zum Messstab übertragen werden. Hierfür wird seitens des Stabes kein zusätzlicher Empfänger benötigt, sondern die Information kann mittels modulierter elektromagnetischer Strahlung transportiert und mit dem Sensor erfasst werden.

Bei Empfangen eines Messsignals kann das Empfangen dem Vermessungsgerät über eine Kommunikationsverbindung bestätigt und dabei eine Identifikationsinformation für das angezielte Ziel übertragen werden (Target ID). Dieses ist vorteilhaft, wenn sich im Bereich des Vermessungsgerätes mehrere 360°-Prismen oder Reflektoranordnungen befinden, um eine evtl. Fehlmessung auf eine andere Reflektoranordnung zu vermeiden.

Auch kann das Aussenden eines scannenden Suchstrahls des Vermessungsgerätes zum schnellen Auffinden von Retroreflektoren im Messraum mittels der Reflektoranordnung bestätigt werden, sobald die emittierte Suchstrahlung (z.B. fächerförmig) in der Reflektoranordnung durch den Detektor erfasst wird.

Die Reflektoranordnung kann so neben der Orientierungsbestimmung auch zum Suchen und Auffinden (Power Search) eingesetzt werden. Zudem kann die Reflektoranordnung die Übermittlung einer Selbstidentifikation bereitstellen (Target ID)

Gemäss einer Ausführung kann die Reflektoranordnung ein Gesamtsichtfeld mit einem elevativen Erfassungswinkel, d.h. Gesamtöffnungswinkel des Sichtfeldes in Elevationsrichtung, von mindestens 30° und bis zu 75° und einem azimutalen Erfassungswinkel von 360° aufweisen.

Die erfindungsgemässen Vorrichtungen werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: ein geodätisches Vermessungssystem mit einer erfindungsgemässen Reflektoranordnung;
- Fig. 2a-b: eine Ausführungsform einer erfindungsgemässen Reflektoranordnung im Querschnitt;
- Fig. 3a-b: eine weitere Ausführungsform einer erfindungsgemässen Reflektoranordnung schematisch im Querschnitt in Seitenansicht und in Draufsicht;
- Fig. 4: ein mit der erfindungsgemässen Reflektoranordnung erzeugbares Intensitätsprofil;
- Fig. 5a-b: eine weitere Ausführungsform einer erfindungsgemässen Reflektoranordnung im Querschnitt in Seitenansicht und in Draufsicht;
- Fig. 6a-c: einen geometrischen Aufbau einer erfindungsgemässen Reflektoranordnung;
- Fig. 7: eine weitere Ausführungsform einer erfindungsgemässen Reflektoranordnung zur Bestimmung von yaw- und pitch-Ausrichtung im Querschnitt; und
- Fig. 8a-b: eine weitere Ausführungsform einer erfindungsgemässen Reflektoranordnung im Querschnitt in Seitenansicht und schematische Darstellung deren Durchtrittsflächen.

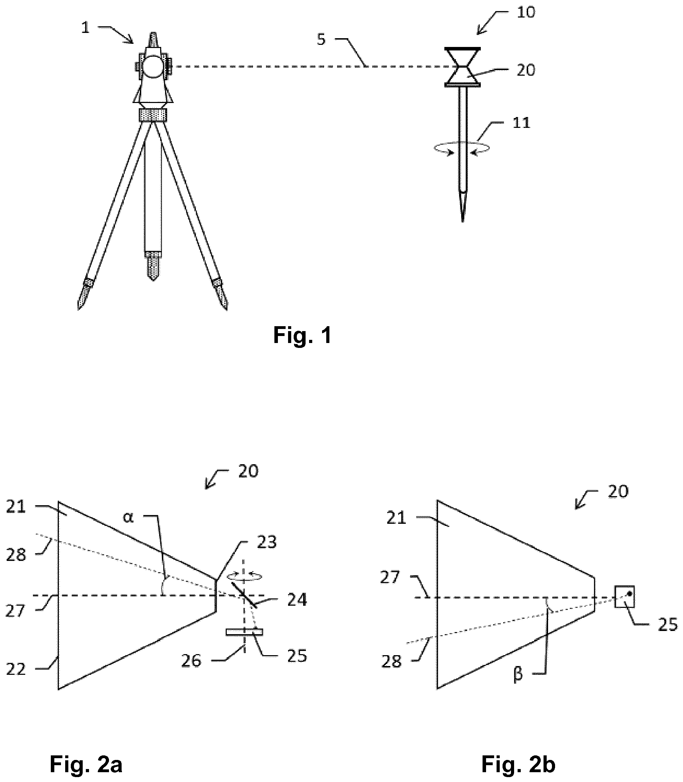

Figur 1 zeigt ein Vermessungsgerät 1, insbesondere ausgestaltet als Totalstation, Theodolit oder Multistation, mit einer Basis und einer Stütze, die um eine Schwenkachse relativ zur Basis schwenkbar ist, sowie mit einer um zwei Achsen - Schwenk- und Kippachse - schwenkbaren Anzieleinheit. Ein Messlaserstrahl 5 ist mit der Anzieleinheit emittierbar und ist im gezeigten Beispiel auf eine erfindungsgemässe Reflektoranordnung 20 eines als Lotstab 10 ausgebildeten Messhilfsinstrument gerichtet. Als Messstrahlung 5 wird typischerweise (kollimierte) Laserstrahlung, die durch eine an dem Vermessungsgerät 1 vorgesehene Laserdiode erzeugbar ist, verwendet. Die Reflektoranordnung 20 verfügt über einen Retroreflektor und eine Sensoranordnung.

Für eine Entfernungsmessung wird die Messstrahlung 5 durch den Retroreflektor parallel zurückreflektiert, seitens des Vermessungsgeräts 1 erfasst und hinsichtlich einer Distanzinformation ausgewertet, beispielsweise mittels einer Laufzeitmessung. Die Lage des Messhilfsinstruments 10 kann anhand der Bestimmung der Winkelstellung der Anzieleinheit relativ zur Basis, also der Emissionsrichtung des Lasers 5, ermittelt werden.

Zur Orientierungsbestimmung des Messhilfsinstruments 10 zumindest bezüglich des rotatorischen Freiheitsgrads 11 des Gierens (engl.: yaw) - und gemäss einer weiteren Ausführungsform auch des Nickens (engl.: pitch) - tritt erfindungsgemäss ein auf die Reflektoranordnung 20 auftreffender und nicht-reflektierter Teil der Strahlung 5 durch den Retroreflektor hindurch und wird mittels einer Strahlführung rotationswinkelabhängig (selektiv) auf einen optisch nachgeordneten Sensor, insbesondere Photodiode, geleitet. Anhand einer aktuellen rotatorischen Ausrichtung der Strahlführung, bei welcher eine Strahldetektion des durchtretenden Strahlungsteils mit dem Sensor festgestellt wird, kann ein Richtungswinkel für den mindestens einen Freiheitsgrad bezüglich der Emissionsrichtung der Messstrahlung 5 bestimmt werden. Während einer Vermessung sind räumliche Position und Orientierung des Vermessungsgeräts 1 typischerweise bekannt. So kann eine absolute Orientierung des Messstabs 10 im Raum, d.h. in einem Koordinatensystem, in dem das Vermessungsgerät 1 eingemessen ist, bestimmt werden.

Figur 2a zeigt eine Seitenansicht einer erfindungsgemässen Reflektoranordnung 20 im Schnitt.

Die Reflektoranordnung 20 weist einen Retroreflektor 21 mit einer Lichteintrittsfläche 22 und einer Lichtdurchtrittsfläche 23 auf. In Einfallsrichtung bezüglich der zu erfassenden Messstrahlung 28 nachgeordnet ist ein Stahlumlenkmittel 24 in Form eines Spiegels angeordnet. Der Spiegel bildet hier den Hauptteil der Strahlführungseinheit. Der Spiegel 24 ist drehbar um eine Rotationsachse 26 gelagert. Eine Drehung oder Rotation des Spiegels 24 kann mittels einer mit dem Spiegel 24 gekoppelten Antriebseinheit (nicht gezeigt) bereitgestellt werden.

Im weiteren Verlauf der Strahlausbreitung ist ein Sensor 25 zur Erzeugung eines Messsignals in Abhängigkeit der Erfassung der Messstrahlung vorgesehen. Der Spiegel 24 und der Sensor 25 sind in der gezeigten Ausführung als die Hauptelemente einer Strahldetektionseinheit im Sinne der Erfindung bildend zu verstehen. Im gezeigten Beispiel ist die optische Achse des Sensors 25 koaxial mit der Rotationsachse 26 gelegen und der Sensor 25 ist als Zeilensensor ausgebildet. Es versteht sich, dass die Erfindung sich auch auf alternative Ausführung beispielsweise mit einer parallel versetzten Anordnung der Achsen und/oder einem Flächensensor bezieht.

Der Erfindung der gezeigten Ausführungsform liegt der Ansatz der Messsignalerzeugung in Abhängigkeit von der Spiegelausrichtung um die Rotationsachse 26 zu Grunde.

Die Messstrahlung 28 tritt mit einem definierten Nickeinfallswinkel α relativ zur optischen Achse 27 des Retroreflektors in den Retroreflektor 21 ein. Der Winkel α repräsentiert hierbei die relative Lage zwischen Messstrahlung 28 und Retroreflektor 21 in Nick- bzw. Elevationsrichtung. In anderen Worten gibt der Winkel α an, wie stark der Retroreflektor 21 relativ zur Ausbreitungsachse der Messstrahlung 28 geneigt ist.

Figur 2b zeigt die Reflektoranordnung 20 im Schnitt in einer Draufsicht von oben. Die Messstrahlung 28 tritt demnach zudem mit einem definierten Giereinfallswinkel β relativ zur optischen Achse 27 des Retroreflektors in den Retroreflektor 21 ein. Der Winkel β repräsentiert hierbei die relative Lage zwischen Messstrahlung 28 und Retroreflektor 21 in Gier- bzw. Azimutrichtung. In anderen Worten gibt der Winkel β an, wie stark der Retroreflektor 21 relativ zur Ausbreitungsachse der Messstrahlung 28 um die Rotationsachse 26 geschwenkt ist.

Die Bestimmung des Gierzustandes des Reflektors 21, also eines aktuellen Winkels (β) um die Rotationsachse 26, kann erfindungsgemäss mittels eines Drehens oder Schwenkens des Spiegels 24 um die Achse 26, eines dabei fortlaufenden Detektierens einer gegebenenfalls auf den Sensor 25 auftreffender Strahlung und einer Bestimmung der aktuellen Spiegelstellung bei Detektion der Strahlung erfolgen. Die Reflektoranordnung 20 weist hierfür insbesondere einen Winkelencoder auf, der eine Winkelstellung des Spiegels 24 um die Rotationsachs bestimmbar macht.

Wird der Reflektor 21 mit Messstrahlung 28 (z.B. kollimierte Laserstrahlung, emittiert von einer Vermessungseinheit) auf dessen Lichteinlassseite 22 angezielt, so tritt die Messstrahlung in den Reflektor 21 ein und wird zu einem überwiegenden Teil aufgrund der Geometrie des Retroreflektors 21 parallel zurück reflektiert. Ein nicht reflektierter Teil der Strahlung 28 tritt an dem hinteren Ende des Reflektors durch die Durchtrittsfläche 23 aus und trifft auf den Spiegel 24.

Die Durchtrittsfläche 23 kann beispielsweise dreiecksförmig ausgeformt sein, insbesondere bei Vorsehung von Tripelprismen.

In einer bestimmten Ausführungsform kann zwischen der Lichtdurchtrittsfläche 23 und dem Spiegel 24 eine Apertur in Form eines Lochs oder eines Schlitzes angeordnet sein, insbesondre bei Verzicht auf eine abbildende Optik. Die Apertur rotiert nicht um die Gierachse 26, sondern ist vorzugsweise fix relativ zur Durchtrittsfläche 23 angeordnet. Durch eine solche Apertur resultiert eine gewünschte Gierwinkelauflösung.

Wie in Fig. 2a gezeigt wird der Strahl 28 mittels des Spiegels 24 auf den Sensor 25 umgelenkt, wo eine entsprechende Detektion der auftreffenden Strahlung erfolgt. Der Messstrahl 28 trifft jedoch abhängig von einem aktuellen Giereinfallswinkel β nur dann den Sensor 25, wenn der Spiegel 24 in der "richtigen" Orientierung um die Achse 26 vorliegt, insbesondere wenn ein azimutal begrenztes Detektionssichtfeld derart ausgerichtet ist, dass die Messstrahlung durch das Detektionssichtfeld tritt. Ändert sich der Winkel β bei gleichbleibender Spiegelausrichtung, trifft der Strahl 28 nicht länger die Sensorfläche. Der Sensor kann also als eine Triggereinheit angesehen werden, mit welcher bei auftretender Stahldetektion eine Orientierungsmessung ausgelöst werden kann.

Der Spiegel wird vorzugsweise kontinuierlich um die Achse 26 rotiert, wobei fortlaufend ein von dem Sensor 25 erzeugbares Signal überwacht wird. Erfolgt eine Strahldetektion mit dem Sensor 25 so wird ein entsprechendes Messsignal erzeugt und erfasst. Durch eine entsprechend angeordnete und ausgeformte Blende (Apertur) kann zudem die Auflösung für die Messsignalerzeugung eingestellt und optimiert werden. Je schärfer hierdurch eine Projektion der einfallenden Strahlung auf den Sensor 25 erzeugt werden kann, desto genauer kann ein aktueller Gierwinkel abgeleitet werden.

Bei einer solchen Strahlerfassung wird ebenfalls ein Messsignal bezüglich der aktuellen Winkelstellung des Spiegels 24 um die Achse 26 erfasst. Dies kann durch Auslesen von jeweiligen Encodermessdaten erfolgen. Die Ausrichtung des Spiegels 24 bei der Strahldetektion korreliert mit dem Einfallswinkel β. Anhand dieser Information lässt sich auf den aktuellen Einfallswinkel β schliessen und damit die Gierausrichtung des Reflektors 21 relativ zur Ausbreitungsachse der Messstrahlung 28 bestimmen.

In einer alternativen Ausführungsform kann der Sensor mit dessen Detektionsfläche direkt hinter dem Reflektor 21 angeordnet und derart um die Rotationsachse drehbar sein, dass die Messstrahlung in Abhängigkeit einer Ausrichtung der Detektionsfläche erfassbar ist. Hierdurch kann auf den Spiegel verzichtet werden.

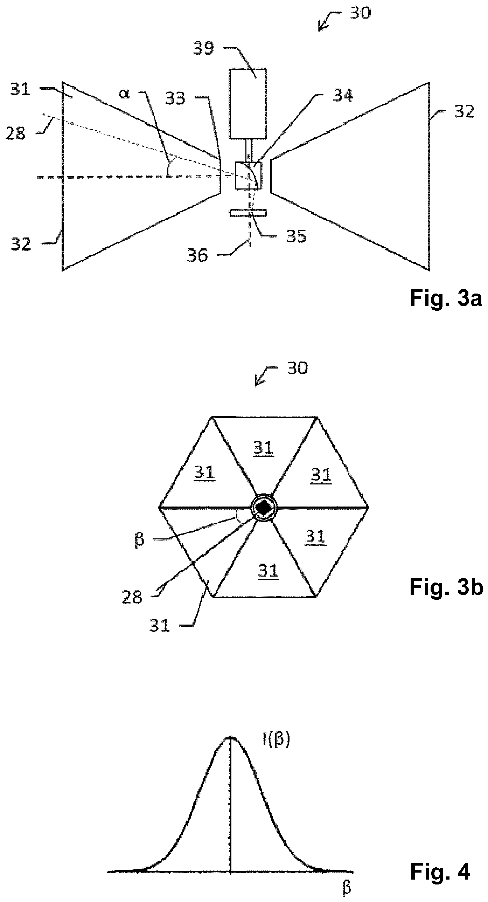

Die Figuren 3a und 3b zeigen eine weitere Ausführungsform einer erfindungsgemässen Reflektoranordnung 30 in einem Schnitt in Seitenansicht und einem Schnitt in Draufsicht.

Die Reflektoranordnung 30 weist sechs Retroreflektoren 31 auf, die als Tripelprismen ausgebildet sind. Die Reflektoranordnung 30 ist als 360°-Retroreflektor ausgestaltet und stellt damit eine Rückreflexion von Messstrahlung über einen azimutalen Winkelbereich von 360° bereit. In anderen Worten stellt die Reflektoranordnung 30 eine Messstrahlerfassung über den Gesamtrotationswinkel von 360° um die Rotationsachse 36 bereit, jedes Tripelprisma eine Messstrahlerfassung in einem Winkelbereich von etwa 60°. Die sechs einzelnen Tripelprismen 31 ermöglichen durch eine relative, ringartige Anordnung den Gesamtreflexionsbereich von 360°. In Figur 3a sind stellvertretend zwei gegenüberliegende Prismen 31 der insgesamt sechs Prismen im Querschnitt gezeigt.

Die Prismen 31 weisen an deren nach Aussen gewandten Endseiten jeweilige Lichteintrittsflächen 32 und jeweilige gegenüberliegende, in Richtung des Zentrums der Anordnung weisende, Durchtrittsflächen 33 auf. Zur Ausbildung einer solchen Lichtdurchtrittsfläche 33 kann bei einem Dreiecksprisma 31 beispielsweise die Tripelecke auf der optischen Achse entfernt (z.B. abgetrennt, abgeschliffen, abpoliert) sein.

Die Reflektoranordnung 30 weist zudem einen Sensor 35 sowie eine Strahlführungseinheit mit einem Strahlumlenkmittel 34 auf. Zudem ist eine Antriebseinheit 39 (z.B. Motor oder Schrittmotor) vorgesehen, die mit dem Umlenkmittel 34 strukturell gekoppelt ist und eine Rotation oder ein Schwenken des Strahlumlenkmittels 34 um eine gesteuerte Rotationsachse 36 bereitstellt. Ferner weist die Reflektoranordnung 30 einen mit der Antriebseinheit 39 gekoppelten Winkelencoder auf, welcher eine Erfassung einer relativen Winkelstellung der Antriebsachse um die Rotationsachse 36 erlaubt.

Das Strahlumlenkmittel 34 weist einen Freiformspiegel auf, welcher einen derart angepassten Oberflächenverlauf aufweist, dass die durch die Durchtrittsfläche tretende Messstrahlung 28 unabhängig von deren (elevativen) Nickeinfallswinkel α (zumindest teilweise) auf einen zentralen Punkt auf der Sensorfläche gelenkt wird. Der Sensor 35 kann in dieser Ausführungsform als PIN-Photodiode oder als Avalanche-Photodiode ausgebildet sein.

Damit die durchtretende Messstrahlung 28 auf den Sensor 35 gelenkt werden kann, muss die rotatorische Ausrichtung der Strahlführungseinheit um die Achse 36 dem (azimutalen) Giereinfallswinkel β der Messstrahlung 28 angepasst sein (Figur 3b). Insbesondere liegen die Ausbreitungsachse der Messstrahlung 28 und eine optische Zentralachse eines durch die Strahlführungseinheit und den Sensor 35 definierten Detektionssichtfeldes in einer Projektion auf eine Ebene hierbei deckungsgleich. Der Giereinfallswinkel β ist in der gezeigten Ausführung mit Bezug zu einer Grenzfläche zwischen zwei angrenzenden Prismen 31 bestimmt, kann aber auch bezüglich einer optischen Achse eines Prismas bestimmt sein.

In einem Detektionsmodus wird die Strahlführungseinheit um die Rotationsachse 36 gedreht und währenddessen ein von dem Sensor 35 bereitgestelltes Detektionssignal überwacht. Das Detektionssignal wird in Abhängigkeit einer Abstimmung und Auslegung des Sensors und von dessen Steuerung beispielsweise nur dann ausgegeben, wenn die Messstrahlung 28 den Sensor 35 erreicht oder kann kontinuierlich variabel in Abhängigkeit einer aktuell gemessenen Strahlintensität erzeugt werden.

Die Bestimmung einer Messgrösse bezüglich des Einfallswinkels der Messstrahlung um die Rotationsachse 36, insbesondere des Giereinfallswinkels, wird durch ein Feststellen (Messen) einer Encoderstellung zum Zeitpunkt der Strahldetektion breitgestellt. Eine entsprechende Detektion kann mittels einer Verarbeitungs- und Steuerungseinheit konfiguriert sein. Die Verarbeitungs- und Steuerungseinheit kann insbesondere ein zeitlich abgestimmtes, insbesondere synchrones, Erfassen der Signale des Sensors und des Encoders bereitstellen. Hierdurch kann gewährleistet werden, dass erfasste Encodermesswerte mit dem Zeitpunkt oder Zeitraum der Strahldetektion eindeutig korrelieren.

Zur Bestimmung der Korrelation zwischen Encoder- und optischem Detektorsignal kann eine einmalige Kalibration des Sensors durchgeführt werden. Diese kann z.B. nach der Herstellung des Sensors als Werkskalibration erfolgen. Zudem kann ist bei dieser Kalibration auch das Temperaturverhalten des Sensors berücksichtigt werden. Über einen eingebauten Temperatursensor können dann entsprechende Effekte bei dem absoluten, optisch gemessenen Gierwinkel im Einsatz berücksichtigt werden.

Für eine präzise Bestimmung des aktuellen Einfallswinkels β kann eine Auswertung eines erfassten zeit- und damit (rotations-)winkelabhängigen Intensitätsverlaufs (vgl. Figur 4) erfolgen.

Figur 4 zeigt eine mit dem Sensor 35 erfasste Intensität I in Abhängigkeit eines Giereinfallswinkels β. Da das Detektionssichtfeld einen Öffnungswinkel um die Rotationsachse 36 von grösser als 0° aufweist, ergibt sich der Intensitätsverlauf zu einer Gaussförmigen oder Gaussähnlichen Kurve. Die gezeigte Kurve ergibt sich insbesondere nach einer Bandpassfilterung und Demodulation der erfassten Messstrahlung. Hierdurch kann ein z.B. durch Sonnenstrahlung verursachtes Hintergrundlicht gefiltert und zudem eine Einhüllende um detektierte Pulse von gepulster Messstrahlung erzeugt werden. Das gezeigte Intensitätsprofil entspricht einer solchen Einhüllenden. Neben einer Reduktion des Hintergrundlichts in der Datenverarbeitung kann auch die Verwendung einer optischen Filterung mit Absorptionsgläsern und/oder dielektischen Interferenzfiltern vorgesehen sein. Diese Filterelemente können im Strahlengang z.B. bei der Lichtdurchtrittsfläche 23 und/oder vor dem Detektor 25 platziert werden.

Für den abgeleiteten Intensitätsverlauf I(β) kann so ein Intensitätsmaximum abgeleitet und für das Maximum der entsprechende Gierwinkel β bestimmt werden. Dieser Winkel β entspricht einem zentralen Einfall der Messstrahlung und ermöglicht hierdurch eine exakte Bestimmung der Ausrichtung der Reflektoranordnung relativ zu der Messstrahlachse.

Die Demodulation der Einhüllenden und eine Lokalisierung des Intensitätspeaks kann digital oder analog erfolgen.

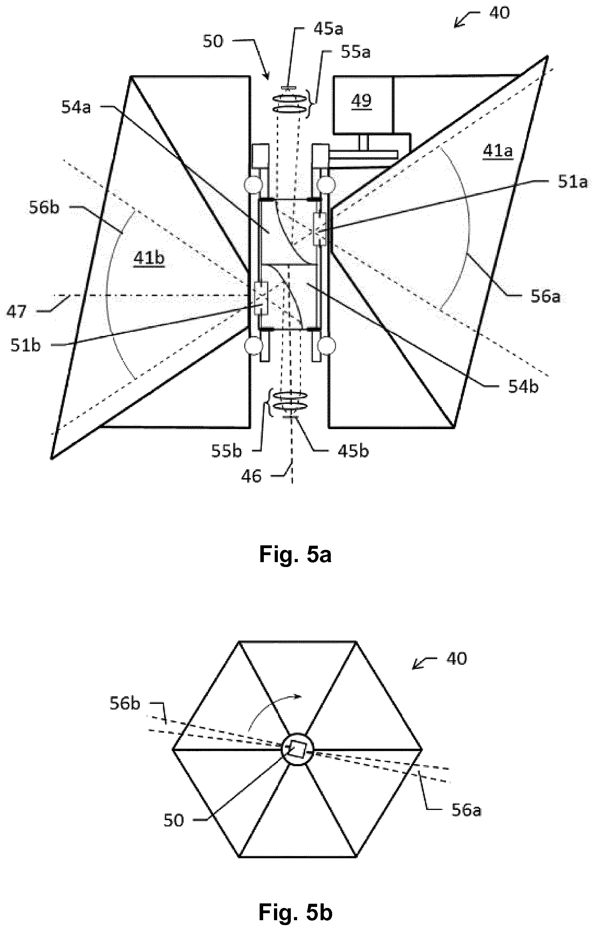

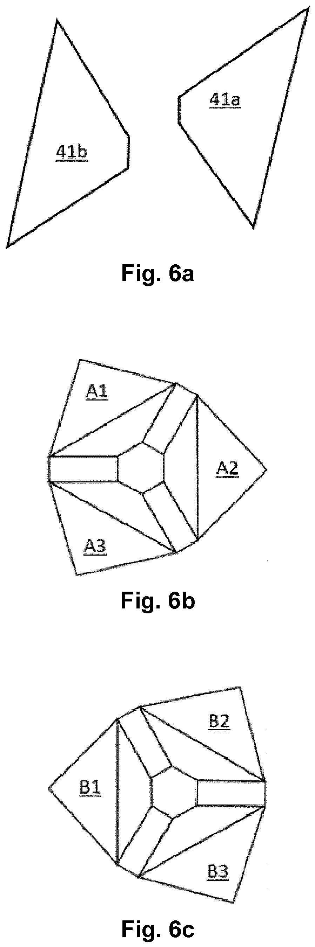

Die Figur 5a zeigt eine weitere Ausführungsform der Erfindung. Die Reflektoranordnung 40 weist wiederum sechs Tripelprismen auf, die in zwei Gruppierungen zu je drei Prismen angeordnet sind (vgl. Figuren 6a-6c). Die Prismen der ersten Gruppe, d.h. deren Sichtfelder, sind hier um 15° nach unten geneigt, die Prismen der zweiten Gruppe sind um 15° nach oben geneigt. D.h. zwei gegenüberliegende Reflektorsichtfelder sind entsprechend gegeneinander um die Rollachse verkippt. Die Figur 5a zeigt die Reflektoranordnung 40 in einem Schnitt in Seitenansicht.

Durch die spezifische Anordnung kann ein Elevationssichtfeld von ± 30° bezüglich der optischen Achse 47 eines (jeden) Prismas (Gesamtsichtfeld von 60°) über den gesamten Azimutwinkel von 360° um die Rotationsachse 46 bereitgestellt werden. Messstrahlung, die innerhalb dieses Sichtfeldes 56a, 56b (Detektionssichtfeld) in den Reflektor fällt, kann mit einem der Sensoren 45a oder 45b - in Abhängigkeit davon auf welches Prisma die Strahlung trifft und welcher Gruppe dieses Prisma zugeordnet ist - erfasst werden.

Die Reflektoranordnung 40 weist hierzu wie erwähnt zwei Sensoren 45a und 45b auf. Die Stahldetektionseinheit 50 verfügt über zwei Strahlführungseinheiten, die eine Umlenkung der eingehenden Strahlung auf einen dieser beiden Sensoren bereitstellen. Die Strahlführungseinheiten sind als gemeinsamer Rotor ausgestaltet und stellt hierdurch eine gesteuerte Drehung oder Rotation der zughörenden Elemente um die Rotationsachse 46 bereit.

Die Strahlführungseinheiten sind im Wesentlichen derart symmetrisch aufgebaut, dass jeweilige optische Elemente zweifach und jeweils versetzt und/oder gespiegelt vorgesehen sind. Es versteht sich, dass in einer alternativen Ausführungsform mit z.B. nur einer Prismengruppe (nicht gezeigt) diese Bauteile lediglich einfach vorgesehen sind.

Die Strahlführungseinheiten weisen einen ersten Strahldurchtritt 51a und einen zweiten Strahldurchtritt 51b mit jeweils einer Zylinderlinse auf, d.h. jede der Strahlführungseinheiten weist einen entsprechenden Strahldurchtritt auf. Der jeweilige Strahldurchtritt 51a und/oder 51b kann alternativ ohne eine Zylinderlinse, jedoch als definierte Apertur (z.B. als Schlitz in einem Holzylinder) ausgebildet sein. Zudem weist die erste Strahlführungseinheit ein erstes und die zweite Strahlführungseinheit ein zweites Strahlumlenkmittel 54a, 54b auf. Die Strahlumlenkmittel 54a, 54b stellen eine Strahlführung von einfallender Messstrahlung auf den jeweils zugeordneten Sensor 45a oder 45b bereit. Die Strahlumlenkmittel 54a und 54b weisen gekrümmte reflektierende Oberflächen auf. Ferner sind eine erste und eine zweite Fokussiergruppe 55a und 55b vorgesehen. Die Fokussiergruppen weisen beispielsweise optische Linsen oder andere optische Elemente auf, die eine Fokussierung von elektromagnetischer Messstrahlung erlauben. Dadurch kann die benötigte Größe des Detektorelements verkleinert werden.

Zwischen dem jeweiligen Strahlumlenkmittel 54a, 54b und der jeweiligen Fokussiergruppe 55a, 55b ist in dieser Ausführungsform jeweils eine Schlitzblende angeordnet. Diese stehen insbesondere in den Fokusebenen der jeweiligen Fokussiergruppen 55a,55b oder der Fokusebene eines optischen Elements der jeweiligen Fokussiergruppe 55a,55b.

Die Oberflächenkrümmungen der Strahlumlenkmittel 54a und 54b sind derart ausgelegt, dass Messstrahlung, welche innerhalb des jeweils bereitgestellten Sichtfeldes 56a oder 56b auf den zugeordneten Reflektor trifft, in Richtung der jeweiligen Fokussiergruppe 55a bzw. 55b umgelenkt wird. Die Oberflächenkrümmungen folgen beispielsweise einem polynomialen Verlauf n-ter Ordnung, wobei n ≥ 2 ist. Die Oberflächen sind beispielsweise als Freiformflächen dritter Ordnung ausgeführt. Mittels der jeweiligen Fokussiergruppe 55a oder 55b wird die umgelenkte Strahlung auf den nachgeordneten Sensor 45a bzw. 45b fokussiert und mit dem Sensor detektiert.

Die Reflektoranordnung 40 weist zudem einen Elektromotor 49 auf, dessen Antriebsachse mit den Strahlführungseinheiten gekoppelt ist. Die Kopplung kann beispielsweise mittels eines Riemens, Zahnriemens oder Zahnrads realisiert sein. Alternativ kann auch eine koaxiale Integration des Motors realisiert sein, bei der die Stahlführungseinheit als Rotor eines Motors (Direct Drive Motors) fungiert. Die Kopplung kann kraft- oder formschlüssig ausgeführt sein. Die gesamte Strahlführungseinheit mit Strahldurchtritten und Strahlumlenkmitteln kann so um die Rotationsachse 46 rotiert werden.

Das in der Seitenansicht gezeigte Sichtfeld 56a bzw. 56b erlaubt die Erfassung von Messstrahlung unabhängig von deren elevativem Einfallswinkel, also unabhängig von einem Einfallswinkel in Nickrichtung, solange dieser innerhalb des zulässigen Nickwinkelbereichs (elevativer Öffnungswinkel bzw. Öffnungswinkel um die Nickachse) liegt. Dieser Winkelbereich kann wie oben erwähnt z.B. 60° betragen (Elevationssichtfeld). Es versteht sich, dass in Abhängigkeit der Auslegung der einzelnen optischen Elemente auch alternative Winkelbereiche vorliegen können.

Die Dimension des Detektionssichtfeldes 56a bzw. 56b wird durch das Zusammenwirken der optischen Eigenschaften (Brechungsindizes, Krümmung, Brennweite, räumlichen Ausdehnung etc.) von Prisma 41a bzw. 41b, Strahldurchtritt 51a bzw. 51b, Umlenkmittel 54a bzw. 54b, Fokussiergruppe 55a bzw. 55b und Sensor 45a bzw. 45b definiert.

Diese Dimension ist nicht allein bezüglich eine Öffnung um die Nickachse gegeben, sondern auch bezüglich eines Öffnungswinkels um die Gierachse. Dies ist mittels Figur 5b veranschaulicht.

Figur 5b zeigt die Reflektoranordnung 40 schematisch von oben in einer Schnittdarstellung. Im Zentrum der Anordnung 40 befindet sich die beiden Strahlführungseinheiten, die, wie durch den gekrümmten Pfeil angedeutet, um die Rotationsachse 46 (Gierachse) drehen. Das durch die Reflektoranordnung bereitgestellte Sichtfeld 56a bzw. 56b dreht entsprechend mit der Rotation der Strahlführungseinheiten um die Gierachse 46.

Der Öffnungswinkel des Sichtfeldes 56a bzw. 56b um die Gierachse, innerhalb dem eine Umlenkung von einfallender Strahlung auf einen der Sensoren 45a oder 45b breitgestellt wird, ist insbesondere signifikant kleiner als der Öffnungswinkel um die Nickachse. Der bereitgestellte Messwinkelbereich um die Gierachse hat z.B. einen Öffnungswinkel von 5°, insbesondere von 1°. Ein auf die Reflektoranordnung 40 gerichteter Laserstrahl kann nur innerhalb dieses Messwinkelbereichs erfasst werden.

Durch die Rotation der Strahlführungseinheiten und gleichzeitige Detektion allfälliger auf den jeweiligen Sensor auftreffender Strahlung wird einerseits gewährleistet, dass die Messstrahlung über den gesamten 360° Rotationsbereich detektierbar ist, und andererseits, anhand des bei Detektion der Strahlung mit dem Sensor erzeugbaren Signals, ein aktueller Rotationszustand (z.B. mittels eines Winkelencoders oder Schrittzählung mit einem Schrittmotor) der Strahlführungseinheiten oder einer der Strahlführungseinheiten festgestellt wird.

Durch die Kombination der beiden Signale (Encoder und Sensor) lässt sich der Rotationszustand von zumindest einer der Strahlführungseinheiten zum Zeitpunkt der Messstrahlerfassung feststellen. Dieser Rotationszustand korreliert direkt mit einer aktuellen Ausrichtung der Reflektoranordnung 40 um die Gierachse. Ein entsprechender Gierwinkel, also eine Ausrichtung der Reflektoranordnung 40 relativ zu einem einfallenden Laserstrahl, lässt sich anhand der so erzeugbaren Encoderinformation, insbesondere zusammen mit einem Intensitätsprofil, ableiten.

Die Wahl der Grösse des Öffnungswinkels des Sichtfeldes 56a bzw. 56b um die Gierachse kann insbesondere von der Messgeschwindigkeit (frame rate) und der Empfindlichkeit des Sensors 45a bzw. 45b sowie einer Rotationsgeschwindigkeit der Strahlführungseinheiten abhängen. Die Grösse des Öffnungswinkels des Sichtfeldes selbst hängt insbesondere von der Öffnung (Breite oder Durchmesser) der Apertur (hier: Schlitzblende) und von der Brennweite der Zylinderlinse des jeweiligen Strahldurchtritts 51a bzw. 51b ab. Für die Bereitstellung eines kleinen Öffnungswinkels wird z.B. ein schmaler Schlitz der Blende und/oder eine lange Brennweite der Linse vorgesehen.

Im Falle eines verhältnismässig sehr klein gewählten Öffnungswinkels kann die Bestimmung des Gierwinkels ausreichend genau direkt mittels Verarbeitung eines bei der Strahlerfassung bestimmten Encoderwertes erfolgen. Hierzu wird ein schneller Sensor mit grosser Messrate eingesetzt oder das Rotieren der Strahlführungseinheiten entsprechend weniger schnell ausgeführt.

Die Bestimmung des Gierwinkels kann, wie oben bereits beschrieben, im Falle eines grösseren Öffnungswinkels unter Berücksichtigung und Verarbeitung einer fortlaufenden oder kontinuierlichen Intensitätsmessung der auf den Sensor auftreffenden Strahlung bei kontinuierlicher Rotation der inneren Umlenkoptik erfolgen (vgl. Figur 4). Aus einem rotationswinkelabhängigen Intensitätsverlauf kann der Gierwinkel sehr präzise abgeleitet werden.

In einem alternativen Messmodus kann eine Rotation der Strahlführungseinheiten bei einer Detektion der Messstrahlung gestoppt bzw. die Ausrichtung der Strahlführungseinheiten so eingestellt werden, dass die Messstrahlung auf einen der Sensoren trifft. Im Folgenden wird die Ausrichtung der Strahlführungseinheiten fortlaufend so eingestellt, dass eine dauerhafte Strahldetektion erfolgt. Bei einer rotatorischen Bewegung der Reflektoranordnung 40 relativ zu einer Ausbreitungsachse der Messstrahlung wird die Ausrichtung der Strahlführungseinheiten entsprechende einer Veränderung des azimutalen Einfallswinkels nachgestellt (Tracking).

Ein solches Nachstellen kann z.B. durch eine fortlaufende Auswertung des Intensitätsprofils bei iterativer Verstellung der Ausrichtung der Strahlführungseinheiten erfolgen. Nimmt die gemessene Intensität ab, so wird die Ausrichtung verändert. Sollte bei der Veränderung der Ausrichtung ein weiterer Abfall der Intensität festgestellt werden, wird die Ausrichtung in die entgegengesetzte Richtung verändert, sodass die gemessene Intensität sich einem zuvor festgestellten Intensitätsmaximum annähert.

Alternativ kann der Sensor als Positions- oder Bildsensor ausgeführt sein, welcher einen Betrag und/oder Richtung einer Ablage eines Strahlauftreffpunkts relativ zu einem Sensorzentrum (z.B. mittels Bildverarbeitung oder detektionsflächenbezogener Schwerpunktbestimmung) bestimmbar macht. Das Nachstellen der Strahlführungseinheiten kann dann derart erfolgen, dass die Ablage reduziert bzw. null wird.

Der Sensor kann als CCD oder CMOS oder als bezüglich der Wellenlänge der Messstrahlung sensitiver, positionsauflösender Detektor ausgebildet sein.

Im Folgenden wird eine Ausführung korrespondierend oder ähnlich zu Figur 5 in anderen Worten beschrieben. Gedreht wird nur die Kollimatoroptik, während beispielsweise die PIN-Fotodiode stillsteht. Der Durchmesser der Optik zwischen den Retroreflektoren ist insbesondere so klein wie möglich gewählt, wobei die Komponenten ober- und unterhalb der Prismen größer sein können. Die vorgesehene Fotodiode ist ebenfalls klein gewählt, da derartige Sensoren eine grössere zeitliche Bandbreite bereitstellen. Ein erfassbarer Neigungsbereich (Nickwinkelbereich) beträgt insbesondere ±30°, d.h. gesamt 60°.

Für die beiden Gruppen von Retroreflektoren sind zwei optische Kanäle vorgesehen, wobei die Innenkreisdurchmesser der Durchtrittsflächen ca. 4,5 - 5,5 mm betragen. Bei einem grösseren Innenkreisdurchmesser kann ein Kanal entfallen. Der Reflexionsspiegel beider Kanäle weist jeweils eine Freiformfläche dritter Ordnung Richtung der Gierachse und eine planare Fläche orthogonal dazu auf. Eine Zylinderlinse mit einer Brennweite im Bereich von f=10 - f=15mm und einem Blendendurchmesser von 1-3mm fokussiert die einfallende elektromagnetische Strahlung zu einer Linie definierter Breite. Eine Fokussiergruppe besteht aus zwei Linsen. Diese projizieren die Eintrittspupille der Zylinderlinse auf die Fotodiode mit einem Durchmesser von z.B. 4mm.

Der Rotor (Strahlführungseinheiten) besteht aus zwei Zylinderlinsen und zwei Freiformspiegeln und weist einen Durchmesser von etwa 8,5 mm auf. Der Rotor ist mechanisch mit dem Prismenrahmen mit Kugel- oder Gleitlagern verbunden und wird von einem axialen oder achsversetzen Motor über ein Zahnrad oder einen Riemen angetrieben. Zwei Statoren bestehend aus den Fotodioden und den Fokussiergruppen sind symmetrisch oberhalb und unterhalb des Rotors angeordnet und sammeln einfallendes Licht im definierten Nickbereich von ±30°. Die beiden Fotodioden messen mit hoher Bandbreite sofort die Intensität des einfallenden Lichts. Eine Synchronisation mit der Strahlemission seitens der Totalstation ist nicht erforderlich.

Der zylindrische Kollimator (Zylinderlinse) lässt die einfallende, ebene Wellenfront in Richtung der Längsachse der Zylinderlinse unverändert und krümmt die Wellenfront in der Richtung, senkrecht zu Längsachse der Zylinderlinse, was die einfallende elektromagnetische Strahlung zu einer Linie fokussiert. Ein gewählter Blendendurchmesser ist insbesondere kleiner als der Messstrahldurchmesser.

Die Umlenkmittel in Form von astigmatischen FreiformSpiegeln (Polynom dritter Ordnung in y-Richtung und planar in x-Richtung) werden verwendet, um die divergierenden Hauptstrahlen parallel auszurichten. Dies ermöglicht kleine Durchmesser für Stator und Rotor und einen verhältnismässig grossen Abstand des Stators, wodurch mehr Platz für weitere Mechaniken zur Verfügung steht.

Die Figuren 6a-6c veranschaulichen die Geometrie des Aufbaus einer Ausführungsform der erfindungsgemässen Reflektoranordnung 40 gemäss Figur 5a. Die Reflektoranordnung 40 weist sechs Tripelprismen auf, die in zwei Gruppen A und B zu je drei Prismen angeordnet sind. Die Prismen der ersten Gruppe A, d.h. deren Prismensichtfelder, sind hier um 15° nach unten geneigt, die Prismen der zweiten Gruppe B sind um 15° nach oben geneigt. Jede Gruppe A und B der einzelnen Retroreflektoren sind also z.B. jeweils um +15° und -15° relativ zu einer horizontalen Achse eines Lotstocks geneigt.

Die Figur 6a zeigt eine Seitenansicht der Reflektoranordnung 40 im Schnitt, wobei nur die Tripelprismen 41a und 41b dargestellt sind. Das zweite Prisma 41b ist der zweiten Gruppe B von Prismen, das erste Prisma 41a ist der ersten Gruppe A von Prismen zugeordnet.

Die Giersensoreinheit (Strahlführungseinheit und Sensor) ist zentral in den 360°-Reflektor integriert. Eine Messung des Einfallswinkels des EDM-Lasers kann so koaxial erfolgen.

Durch die Neigung der Prismen ergibt sich insbesondere ein vertikaler Versatz der Retroreflektor-Eckspitzen beider Gruppen von mehr als 1 mm. Eine minimale Stirnfläche von entfernten Eckspitzen der Prismen kann realisiert werden, indem die jeweilige Ecke so geschnitten ist, dass die Dreiecksbodenlänge einen Giermessbereich von 60° für jeden Retroreflektor ermöglicht.

Diese Konfiguration führt zu einem vertikalen Versatz und erfordert wie gezeigt zwei Messkanäle, um die Messungen durch beide Prismengruppen A und B abdecken.

Figur 6b zeigt die Prismen der Gruppe A in deren Anordnung in einer Ansicht von unten. Figur 6c zeigt die Prismen der Gruppe B in deren Anordnung in einer Ansicht von oben.

Ein aus der gezeigten Anordnung resultierendes Gesamtsichtfeld, d.h. über einen azimutalen Winkelbereich von 360°, stellt durchgehend einen Blickwinkel (Elevation) von mindestens ± 30° in Elevationsrichtung (orthogonal zum Azimut; gesamter Öffnungswinkel von mindestens 60°, bezogen auf die Horizontalebene) bereit.

Diese Reflektoranordnung 40 eines 360° Reflektors weist als einen Vorteil auf, dass die optische Achse des Sensors durch die Umlenkung mittels der spezifischen optischen Baugruppen im Wesentlichen koaxial mit den optischen Achsen der zugeordneten Prismen ist. Damit kann die Messstrahlung der Distanzmesseinheit einer Totalstation gleichzeitig zur Orientierungsbestimmung der Reflektoranordnung 40 oder eines diese Anordnung tragenden Pols verwendet werden. Zudem ist die Sensoranordnung voll in den Reflektor integriert und von aussen nicht sichtbar. Die Reflektoranordnung 40 ist damit sehr kompakt ausgeführt. Ein weiterer Vorteil ist die hierdurch gegebene sehr gute Isolation gegen Umwelteinflüsse (z.B. Feuchtigkeit, Staub) von aussen.

Wie in Figur 6a gezeigt sind jeweils gegenüberliegende Prismen zum einen bezüglich deren Positionierung entlang der Rotationsachse versetzt und zum zweiten ist der Winkel zwischen der Durchtrittsfläche und der Eintrittsfläche des ersten Prismas 41a und der Durchtrittsfläche und der Eintrittsfläche des zweiten Prismas 41b betragsmässig vorzugsweise identisch, bezüglich der Richtung jedoch entgegengesetzt. Im gezeigten Ausführungsbeispiel sind jeweils benachbarte Prismen entsprechend unterschiedlich ausgerichtet.

Jeder der beiden Sensoren 45a und 45b ist zur Erfassung von Licht aus jeweils drei Prismen angeordnet und eingerichtet.

Es versteht sich, dass die Erfindung nicht auf eine Ausführung mit sechs Prismen limitiert ist. Vielmehr sind auch Ausführungsformen umfasst, die mehr (oder weniger) als sechs Einzelprismen umfassen.

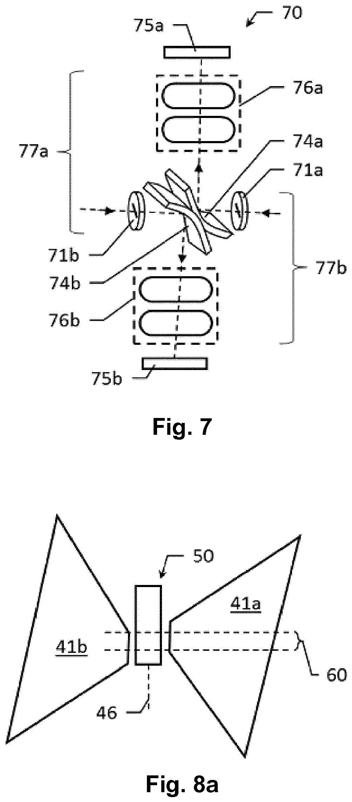

Gemäss einer weiteren erfindungsgemässen Ausführungsform, wie in Figur 7 gezeigt, kann mit der Reflektoranordnung sowohl ein Gieren als auch ein Nicken bestimmt werden.

Für eine Bestimmung des Azimuts des Polevektors (Vektor des Lotstocks) bei 90° Rollwinkel (also insbesondere bei einer horizontalen Ausrichtung des Poles), ist eine zusätzliche Bestimmung der Orientierung in Nickrichtung (pitch) erforderlich. Der Azimutwinkel kann generell mit unterschiedlicher Sensitivität aus dem Gierwinkel abgeleitet werden. Wenn der Lotstab parallel zum Schwerkraftfeld steht (Rollwinkel = 0°), ist der Azimutwinkel gleich dem bestimmten Gierwinkel (Yaw). Die Sensitivität dAzimut/dyaw nimmt jedoch proportional zu cos(Rollwinkel) ab. Wenn der Rollwinkel = 90° ist, dann ist der Azimut nicht länger vom Gierwinkel abhängig, sondern ist gleich dem aktuellen Nickwinkel (pitch). Für eine 6DOF-Bestimmung des Lotstabs kann somit die Messung des Nickwinkels ebenfalls von Bedeutung sein.

Dies kann durch die Verwendung einer Strahldetektionseinheit 70 mit zwei Strahlführungseinheiten 77a,77b und zwei Sensoren 75a,75brealisiert werden, die gegenläufig geneigte Nickebenen definieren. Eine solche Sensorkonfiguration erfordert beispielsweise einen Innendurchmesser der Durchlassflächen grösser 5,5mm, da jeder Sensor den gesamten 360°-Gierbereich abzudecken hat.

Die Mittelpunkte der Durchtrittsflächen der Prismen liegen hier vorzugsweise auf einer gemeinsamen Ebene.

Die geneigten Nickebenen werden durch die Anordnung von mitrotierenden Zylinderlinsen 71a und 71b (hier in Kombination einer als Schlitz ausgebildeten Apertur) und jeweiligen Freiformspiegeln 74a und 74b realisiert, wobei diese Komponenten um 45° geneigt (d.h. rotiert um die Rollachse) vorliegen. In einer Projektion der hierdurch definierten Neigungsachse und der Gierachse auf eine Ebene schliessen diese Achsen einen Winkel von 45° ein.

Die zwei Strahlführungseinheiten 77a und 77b sind derart angeordnet, dass die Freiformspiegel 74a,74b relativ zueinander Rücken an Rücken angeordnet sind, und dass die Zylinderlinsen 71a,71b entgegengesetzte Kipprichtung und Ausrichtungen haben, deren optische Achsen jedoch in einer Ebene liegen. Der Gierabstand beträgt für die beiden Freiformspiegel 74a,74b sowie für die beiden Zylinderlinsen 71a,71b jeweils 180°. Die Detektoren (Sensoren) für beide Anordnungen sollten sich jeweils oberhalb und unterhalb der Schlitzöffnung befinden. Zur Strahlführung der einfallenden Messstrahlung (Fokussierung der Strahlung auf den Sensor) sind bevorzugt weitere optische Baugruppen 76a,76b vorgesehen, die eine robuste und positionsgenaue Detektion seitens des Sensors bereitstellen.

Aufgrund des begrenzten Platzangebots für den Freiformspiegel können die jeweiligen Neigungsebenen leicht gebogen sein.

Die Bestimmung des Nickwinkels kann damit durch Detektion der eintretenden Messstrahlung mit beiden Sensoren 75a,75b erfolgen. Aus einem Vergleich der so erfassten Messsignale lässt sich aufgrund der durch die unterschiedlichen Neigungen gegebenen Unterschiede der Lichtdetektion eine Ableitung des Nickwinkels realisieren. Der Nickwinkel kann insbesondere aus einer zeitlichen Differenz der Signalerfassung der beiden Messkanäle oder anhand einer rotationswinkelabhängigen Signalerfassung abgeleitet werden.

Figur 8a zeigt eine weitere Ausführungsform der erfindungsgemässen Reflektoranordung. Stellvertretend für eine Mehrzahl kreisförmig um die Gierachse angeordneter Retroreflektoren sind wiederum zwei der Reflektoren (41a und 41b) abgebildet.

Die Projektionen der jeweils gegenüberliegenden Durchtrittsflächen auf eine zu den Durchtrittsflächen parallele Ebene weisen eine gemeinsame Schnittfläche auf, d.h. die Projektionen überlappen. Der dargestellte Überlappungsbereich 60 betrifft hier sämtliche vorgesehene Reflektoren und deren Durchtrittsflächen. Der dargestellte Überlappungsbereich 60 wird insbesondere durch eine virtuelle Rotation des dargestellten Bereichs um die Gierachse 46 aufgespannt.

Hierdurch wird ermöglicht, dass zur Bestimmung des Gierwinkels (nur) eine Strahldetektionseinheit 50 erforderlich ist, die eine Strahlerfassung innerhalb des Überlappungsbereichs 60 bereitstellt. Im Konkreten kann hier z.B. mittels eines einzigen Umlenkspiegels, der rotierbar ist, eine Strahlführung von einfallender Laserstrahlung auf einen einzigen Sensor über einen Gierwinkelbereich von 360°, d.h. unabhängig von der azimutalen Einfallsrichtung insofern die Strahlung innerhalb des elevativen Reflektorsichfeldes bzw. des elevativen Detektionssichtfeldes einfällt, bereitgestellt werden.

Der vertikale Versatz der jeweiligen Reflektoren (Prismen) kann dabei in Abhängigkeit von gewünschtem Bauraum im Inneren der Reflektoranordnung und ausreichendender Überlappung für eine robuste Strahlerfassung gewählt werden.

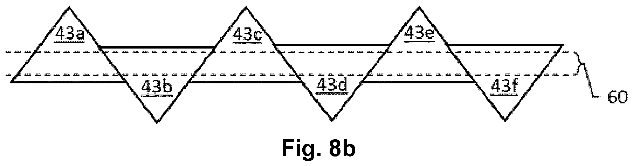

Eine mögliche relative Anordnung von Durchtrittsflächen 43a-f benachbarter Prismen gemäss einer Ausführungsform der Erfindung ist mit Figur 8b gezeigt. Die Durchtrittsflächen 43a-f sind zur Verdeutlichung abgerollt auf eine Ebene dargestellt. Die Prismen bzw. deren Durchtrittsflächen 43a-f sind derart (in Richtung entlang der Gierachse) versetzt zueinander angeordnet, dass ein für alle Durchtrittsflächen 43a-f gemeinsamer Überlappungsbereich 60 resultiert.

Es versteht sich, dass diese dargestellten Figuren nur mögliche Ausführungsbeispiele schematisch darstellen.

## Patentansprüche

1. Reflektoranordnung (20,30,40) zur Positionsbestimmung und/oder Markierung von Zielpunkten, insbesondere für die industrielle bzw. geodätische Vermessung, mit mindestens
• einem Retroreflektor (21,31,41a,41b), der
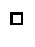 eine Positionsbestimmung für die Reflektoranordnung (20,30,40) mittels paralleler, insbesondere koaxialer, Messstrahlreflexion bereitstellt, 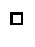
eine Durchtrittsfläche (23,33) für zumindest einen Teil von in den Retroreflektor (21,31,41a,41b) eintretender Messstrahlung (5,28) als Orientierungsmessstrahlung bereitstellt und 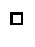
ein Reflektorsichtfeld mit einem ersten Öffnungswinkel um eine Gierachse (46) und einem zweiten Öffnungswinkel um eine orthogonal zu der Gierachse (46) stehende Nickachse bereitstellt, und
• einer Strahldetektionseinheit (50,70), mittels welcher die durch den Retroreflektor (21,31,41a,41b) durchtretende Orientierungsmessstrahlung erfassbar ist,
wobei eine räumliche Orientierung der Reflektoranordnung (20,30,40) anhand einer Orientierung eines durch zumindest die Gierachse (46) definierten körpereigenen Koordinatensystems relativ zu einem externen Koordinatensystem zumindest anhand eines relativen Gierwinkels (β) definierbar ist, wobei der Gierwinkel (β) eine rotatorische Ausrichtung der Reflektoranordnung um die Gierachse (46) angibt, wobei die Strahldetektionseinheit (50,70) aufweist
• einen ersten Sensor (25,35,45a,45b,75a,75b) zur Erzeugung eines Signals in Abhängigkeit einer Erfassung von Orientierungsmessstrahlung und
• eine erste Strahlführungseinheit (77a,77b), wobei der erste Sensor (25,35,45a,45b,75a,75b) und die erste Strahlführungseinheit derart angeordnet sind, dass
• durch ein Zusammenwirken der ersten Strahlführungseinheit (77a,77b) und des ersten Sensors (25,35,45a,45b,75a,75b) ein Detektionssichtfeld (56a,56b) zur Erfassung der Orientierungsmessstrahlung definiert ist, das einen Öffnungswinkel um die Gierachse aufweist, welcher kleiner als der erste Öffnungswinkel des Reflektorsichtfeldes ist,
• eine Ausrichtung des Detektionssichtfelds (56a,56b) um die Gierachse (46) mittels eines Schwenkens oder Rotierens der ersten Strahlführungseinheit (77a,77b) um die Gierachse variierbar ist und
• durch den Retroreflektor (21,31,41a,41b) durchtretende Orientierungsmessstrahlung in Abhängigkeit von der Ausrichtung des Detektionssichtfelds mit dem ersten Sensor (25,35,45a,45b,75a,75b) erfassbar ist, und wobei die erste Strahlführungseinheit (77a,77b) eine Rotationsachse (26,36,46) definiert, wobei die erste Strahlführungseinheit (77a,77b) zur Variation der Ausrichtung des Detektionssichtfelds (56a,56b) drehbar um die Rotationsachse (26,36,46) gelagert ist und ein rotationswinkelabhängiges Erfassen der Orientierungsmessstrahlung bereitstellt.

2. Reflektoranordnung (20,30,40) nach Anspruch 1,
**dadurch gekennzeichnet, dass**
die erste Strahlführungseinheit (77a,77b) zumindest einen Strahldurchtritt (51a,51b,71a,71b) aufweist, welcher Strahldurchtritt (51a,51b,71a,71b) als längliche Apertur ausgeführt ist, insbesondere sich parallel zur Gierachse erstreckend angeordnet und/oder schlitzförmig ausgeformt, insbesondere wobei der Strahldurchtritt (51a,51b,71a,71b) als Hohlzylinder mit einer kreisrunden Grundfläche und einer die Strahltransmission bereitstellenden Ausnehmung, insbesondere Schlitz, in der Zylinderwand ausgebildet ist, wobei ein Mittelpunkt des Hohlzylinders auf der Gierachse (46) liegt oder eine Zylinderachse des Hohlzylinders mit der Gierachse (46) koaxial ist.

3. Reflektoranordnung (20,30,40) nach einem der vorangehenden Ansprüche,
**dadurch gekennzeichnet, dass**
die Reflektoranordnung (20,30,40), insbesondere die erste Strahlführungseinheit (77a,77b), ein zur Umlenkung und/oder Fokussierung der durch die Durchtrittsfläche (23,33), insbesondere durch den Strahldurchtritt, tretenden Strahlung auf den ersten Sensor (25,35,45a,45b,75a,75b) ausgebildetes und angeordnetes Strahlumlenkmittel (24,34,54a,54b,74a,74b) aufweist, insbesondere einen Körper mit einer reflektierenden Freiformoberfläche dritter Ordnung.

4. Reflektoranordnung (20,30,40) nach einem der vorangehenden Ansprüche,
**dadurch gekennzeichnet, dass**
der erste Sensor (25,35,45a,45b,75a,75b) zur Erzeugung des Signals
• in Abhängigkeit von einer Intensität von auf den ersten Sensor (25,35,45a,45b,75a,75b) auftreffender Orientierungsmessstrahlung
ausgebildet ist, insbesondere als photosensitiver Sensor.

5. Reflektoranordnung (20,30,40) nach einem der vorangehenden Ansprüche,
**dadurch gekennzeichnet, dass**
die Reflektoranordnung (20,30,40)
• eine Antriebseinheit (39,49) aufweist, die ein gesteuertes Schwenken und/oder Rotieren der ersten Strahlführungseinheit (77a,77b) um die Rotationsachse (26,36,46) oder Gierachse bereitstellt und/oder
• eine Encodereinheit aufweist, die zur Erfassung der Ausrichtung des Detektionssichtfeldes (56a,56b) ausgebildet ist, insbesondere wobei die Encodereinheit mit der ersten Strahlführungseinheit (77a,77b), der Antriebseinheit (39,49) und/oder der Rotationsachse (26,36,46) gekoppelt ist.

6. Reflektoranordnung (20,30,40) nach einem der vorangehenden Ansprüche,
**dadurch gekennzeichnet, dass**
die Reflektoranordnung (20,30,40) eine Auswerteeinheit aufweist, die zur Bestimmung der Ausrichtung des Detektionssichtfeldes (56a,56b) in Abhängigkeit eines Signals von dem ersten Sensor (25,35,45a,45b,75a,75b) eingerichtet ist.

7. Reflektoranordnung (20,30,40) nach Anspruch 6,
**dadurch gekennzeichnet, dass**
die Auswerteeinheit derart konfiguriert ist, dass
• vermittels des ersten Sensors (25,35,45a,45b,75a,75b) ein intensitätsabhängiger Signalverlauf erfassbar ist und/oder bei einer Rotation der ersten Strahlführungseinheit (77a,77b) eine Signalintensität in Abhängigkeit einer jeweiligen Gierausrichtung der ersten Strahlführungseinheit (77a,77b), insbesondere in Abhängigkeit eines Encodersignals, bestimmbar und/oder speicherbar ist
und/oder
• der Gierwinkel (β) in Abhängigkeit der Bestimmung der Ausrichtung des Detektionssichtfeldes (56a,56b) ableitbar ist, insbesondere wobei der Gierwinkel (β) mittels Signalauswertung, insbesondere mittels Auswertung des Intensitätsverlaufs, bestimmbar ist, und/oder
• ein Nickwinkel anhand eines zeitlichen oder rotationswinkelbezogenen Abstands zweier Messsignalerfassungen bei einer Rotation der ersten Strahlführungseinheit (77a,77b) von weniger als 360° ableitbar ist.

8. Reflektoranordnung (20,30,40) nach einem der vorangehenden Ansprüche,
**dadurch gekennzeichnet, dass**
der Retroreflektor (21,31,41a,41b) als Prisma, insbesondere Tripelprisma, ausgebildet ist und das Prisma
• eine ein Polygon, insbesondere Dreieck, bildende Lichteintrittsfläche (22,32) und
• die der Lichteintrittsfläche (22,32) gegenüberliegende Durchtrittsfläche (23,33) als Apertur
aufweist, insbesondere wobei
• die Durchtrittsfläche (23,33) an einer Ecke des Prismas gebildet ist, insbesondere wobei die Durchtrittsfläche (23,33) durch eine ausgesparte Ecke des Prismas gebildet ist und ebenfalls ein Polygon, insbesondere Dreieck, definiert, und/oder
• der Retroreflektor (21,31,41a,41b) eine optische Achse (27,47) definiert, wobei die optische Achse (27,47) orthogonal zur Durchtrittsfläche (23,33) verläuft und insbesondere den Mittelpunkt der Durchtrittsfläche (23,33) schneidet.

9. Reflektoranordnung (20,30,40) nach einem der vorangehenden Ansprüche,
**dadurch gekennzeichnet, dass**
die Reflektoranordnung (20,30,40) als 360°-Retroreflektor mit einer Mehrzahl, insbesondere mit sechs, aneinander angrenzend angeordneter und als Prismen ausgebildeter Retroreflektoren (21,31,41a,41b), die gemäss Anspruch 8 ausgebildet sind, ausgebildet ist, wobei
• die Mehrzahl der Prismen ringförmig angeordnet sind, insbesondere einen Ring bilden, und
• der 360°-Retroreflektor ein Gesamtsichtfeld um die Gierachse (β) von 360° definiert,
insbesondere wobei die optischen Achsen zumindest zweier, insbesondere dreier, Prismen einen gemeinsamen Schnittpunkt mit der Gierachse (46) aufweisen.

10. Reflektoranordnung (20,30,40) nach Anspruch 9,
**dadurch gekennzeichnet, dass**
die Mehrzahl der Retroreflektoren (21,31,41a,41b) derart angeordnet ist, dass
• die Reflektoranordnung (20,30,40) eine zentrale Auslassung aufweist, wobei die Gierachse (46) sich zentral durch die Auslassung erstreckt,
• die Strahldetektionseinheit (50) zumindest teilweise in der Auslassung angeordnet ist und
• die Strahldetektionseinheit (50) zur einfallswinkelabhängigen Erfassung der durch eine beliebige der Durchtrittsflächen (23,33) der Retroreflektoren (21,31,41a,41b) durchtretenden Orientierungsmessstrahlung über das Gesamtsichtfeld von 360° ausgebildet ist.

11. Reflektoranordnung (20,30,40) nach einem der vorangehenden Ansprüche,
**dadurch gekennzeichnet, dass**
die Strahldetektionseinheit (50) eine zweite Strahlführungseinheit (77b) und einen zweiten Sensor (25,35,45a,45b,75a,75b) aufweist, wobei die erste Strahlführungseinheit (77a) einer ersten Prismengruppe (A1-A3) und die zweite Strahlführungseinheit (77b) einer zweiten Prismengruppe (B1-B3) zugeordnet ist, insbesondere wobei
• die erste und die zweite Prismengruppe (A1-A3,B1-B3) jeweils drei Prismen aufweist und/oder
• die erste und die zweite
Strahlführungseinheit (77a,77b) in der Auslassung angeordnet sind.

12. Reflektoranordnung (20,30,40) nach Anspruch 11,
**dadurch gekennzeichnet, dass**
• die erste Prismengruppe (A1-A3) und die erste Strahlführungseinheit (77a) eine Erfassung der durch die erste Prismengruppe (A1-A3) bereitstellbaren und mittels der ersten Strahlführungseinheit (77a) auf den ersten Sensor (45a,75a) projizierbaren Orientierungsmessstrahlung durch den ersten Sensor (45a,75a) bereitstellen und
• die zweite Prismengruppe (B1-B3) und die zweite Strahlführungseinheit (77b) eine Erfassung der durch die zweite Prismengruppe (B1-B3) bereitstellbaren und mittels der zweiten Strahlführungseinheit (77b) auf den zweiten Sensor (45b,75b) projizierbaren Orientierungsmessstrahlung durch den zweiten Sensor (45b,75b) bereitstellen,
insbesondere wobei
• die Mittelpunkte der Durchtrittsflächen der Prismen der ersten Prismengruppe (A1-A3) in einer ersten Ebene liegen, die Mittelpunkte der Durchtrittsflächen der Prismen der zweiten Prismengruppe (B1-B3) in einer zweiten Ebene liegen und die erste Ebene und die zweite Ebene parallel zueinander ausgerichtet sind und einen bestimmten Abstand aufweisen, insbesondere wobei die Ebenen im Wesentlichen orthogonal zu der Gierachse liegen, und/oder
• die Prismen der ersten Prismengruppe (A1-A3) und Prismen der zweiten Prismengruppe (B1-B3) relativ zu einer orthogonal zur Gierachse ausgerichteten Ebene entgegengesetzt, insbesondere betragsmässig gleich, verkippt sind.

13. Reflektoranordnung (20,30,40) nach einem der Ansprüche 1 bis 10,
**dadurch gekennzeichnet, dass**
die Strahldetektionseinheit (50) eine zweite Strahlführungseinheit (77b) und einen zweiten Sensor (25,35,45a,45b,75a,75b) aufweist, wobei
• sowohl die erste als auch die zweite Strahlführungseinheit (77a,77b) zur einfallswinkelabhängigen Erfassung der durch eine beliebige der Durchtrittsflächen (23,33) der Retroreflektoren (21,31,41a,41b) durchtretenden Orientierungsmessstrahlung über das Gesamtsichtfeld von 360° angeordnet und ausgebildet ist,
• die erste und die zweite Strahlführungseinheit (77a,77b) jeweils ein Strahlumlenkmittel (24,34,54a,54b,74a,74b) und jeweils einen schlitzförmigen Strahldurchtritt (51a,51b,71a,71b) aufweisen, wobei 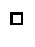
sowohl das erste und das zweite Strahlumlenkmittel (24,34,54a,54b,74a,74b) als auch der erste und der zweite schlitzförmige Strahldurchtritt (51a,51b,71a,71b) mit einem Gierabstand von jeweils 180° relativ zueinander angeordnet und ausgerichtet sind,
□ eine durch den jeweiligen schlitzförmigen Strahldurchtritt (51a,51b,71a,71b) definierte Schlitzerstreckungsachse um eine zu einer Rollachse parallelen oder koaxialen Achse bezüglich der Gierachse verkippt ist, insbesondere um einen Winkel aus einem Winkelbereich von 30° bis 60°, insbesondere um 45°, wobei die Rollachse orthogonal sowohl zur Gierachse als auch zur Nickachse ausgerichtet ist,
□ eine durch eine Projektion des jeweiligen Strahlumlenkmittels (24,34,54a,54b,74a,74b) auf eine durch die Gierachse und Nickachse definierte Ebene resultierende Ausrichtung des Strahlumlenkmittels (24,34,54a,54b,74a,74b) um die zur Rollachse parallele oder koaxiale Achse bezüglich der Gierachse verkippt ist, insbesondere um einen Winkel aus einem Winkelbereich von 30° bis 60°, insbesondere um 45°,
□ die Verkippungen des ersten Strahldurchtritts (51a,71a) und des ersten Strahlumlenkmittels (54a,74a) betrags- und richtungsmässig gleich sind und
□ die Verkippungen des zweiten Strahldurchtritts (51b,71b) und des zweiten Strahlumlenkmittels (54b,74b) betrags- und richtungsmässig gleich sind,
insbesondere wobei die Verkippungen des ersten und zweiten Strahldurchtritts (51a,51b,71a,71b) und des ersten und zweiten
Strahlumlenkmittels (54a,54b,74a,74b) zumindest richtungsmässig um die zur Rollachse parallele oder koaxiale Achse gleich sind.

14. Messhilfsinstrument (10), insbesondere Lotstab, Vermessungsstab oder Tastwerkzeug, mit einer Reflektoranordnung (20,30,40) nach einem der Ansprüche 1 bis 13, wobei das Messhilfsinstrument (10) zur kontaktlosen oder taktilen Erfassung eines Zielpunkts an einem Objekt mit definiertem Positionsbezug zu der Reflektoranordnung (20,30,40) ausgebildet ist.

## Claims

1. Reflector arrangement (20, 30, 40) for determining the position and/or marking of target points, in particular for industrial and/or geodetic surveying, having at least
• one retroreflector (21, 31, 41a, 41b), which
□ provides a position determination for the reflector arrangement (20, 30, 40) by means of parallel, in particular coaxial, measurement beam reflection,
□ provides a passage surface (23, 33) for at least a part of measurement radiation (5, 28) entering the retroreflector (21, 31, 41a, 41b) as orientation measurement radiation, and
□ provides a reflector field of view having a first aperture angle around a yaw axis (46) and a second aperture angle around a pitch axis orthogonal to the yaw axis (46), and
• a beam detection unit (50, 70), by means of which the orientation measurement radiation passing through the retroreflector (21, 31, 41a, 41b) is acquirable, wherein a spatial orientation of the reflector arrangement (20, 30, 40) is definable with the aid of an orientation of a body-intrinsic coordinate system defined by at least the yaw axis (46) in relation to an external coordinate system at least with the aid of a relative yaw angle (β), wherein the yaw angle (β) specifies a rotational alignment of the reflector arrangement around the yaw axis (46),
wherein the beam detection unit (50, 70) comprises
• a first sensor (25, 35, 45a, 45b, 75a, 75b) for generating a signal in dependence on an acquisition of orientation measurement radiation and
• a first beam guiding unit (77a, 77b),
wherein the first sensor (25, 35, 45a, 45b, 75a, 75b) and the first beam guiding unit are arranged in such a way that
• a detection field of view (56a, 56b) for acquiring the orientation measurement radiation is defined by an interaction of the first beam guiding unit (77a, 77b) and the first sensor (25, 35, 45a, 45b, 75a, 75b), which field of view has an aperture angle around the yaw axis which is less than the first aperture angle of the reflector field of view,
• an alignment of the detection field of view (56a, 56b) around the yaw axis (46) is variable by means of a pivot or rotation of the first beam guiding unit (77a, 77b) around the yaw axis, and
• orientation measurement radiation passing through the retroreflector (21, 31, 41a, 41b) is acquirable in dependence on the alignment of the detection field of view using the first sensor (25, 35, 45a, 45b, 75a, 75b),
and wherein the first beam guiding unit (77a, 77b) defines a rotational axis (26, 36, 46), in particular aligned coaxially to the yaw axis (46), wherein the first beam guiding unit (77a, 77b) is rotatably mounted around the rotational axis (26, 36, 46) for variation of the alignment of the detection field of view (56a, 56b) and provides a rotation-angle-dependent acquisition of the orientation measurement radiation.

2. Reflector arrangement (20, 30, 40) according to Claim 1,
**characterized in that**
the first beam guiding unit (77a, 77b) comprises at least one beam passage (51a, 51b, 71a, 71b), which beam passage (51a, 51b, 71a, 71b) is embodied as an oblong aperture, in particular arranged extending in parallel to the yaw axis and/or formed slotted, in particular wherein the beam passage (51a, 51b, 71a, 71b) is designed as a hollow cylinder having a circular footprint and a recess, in particular slit, in the cylinder wall, said recess providing the beam transmission, wherein a center point of the hollow cylinder is located on the yaw axis (46) or a cylinder axis of the hollow cylinder is coaxial with the yaw axis (46).

3. Reflector arrangement (20, 30, 40) according to any one of the preceding claims,
**characterized in that**
the reflector arrangement (20, 30, 40), in particular the first beam guiding unit (77a, 77b), comprises a beam deflection means (24, 34, 54a, 54b, 74a, 74b) designed and arranged for deflecting and/or focusing the radiation onto the first sensor (25, 35, 45a, 45b, 75a, 75b), said radiation passing through the passage surface (23, 33), in particular through the beam passage, in particular a body having a reflective third-order freeform surface.

4. Reflector arrangement (20, 30, 40) according to any one of the preceding claims,
**characterized in that**
the first sensor (25, 35, 45a, 45b, 75a, 75b) is designed for generating the signal
• in dependence on an intensity of orientation measurement radiation incident on the first sensor (25, 35, 45a, 45b, 75a, 75b),
in particular as a photosensitive sensor.

5. Reflector arrangement (20, 30, 40) according to any one of the preceding claims,
**characterized in that**
the reflector arrangement (20, 30, 40)
• comprises a drive unit (39, 49), which provides a controlled pivot and/or rotation of the first beam guiding unit (77a, 77b) around the rotational axis (26, 36, 46) or yaw axis
and/or
• comprises an encoder unit, which is designed to acquire the alignment of the detection field of view (56a, 56b), in particular wherein the encoder unit is coupled to the first beam guiding unit (77a, 77b), the drive unit (39, 49), and/or the rotational axis (26, 36, 46).

6. Reflector arrangement (20, 30, 40) according to any one of the preceding claims,
**characterized in that**
the reflector arrangement (20, 30, 40) comprises an analysis unit, which is configured to determine the alignment of the detection field of view (56a, 56b) in dependence on a signal from the first sensor (25, 35, 45a, 45b, 75a, 75b).

7. Reflector arrangement (20, 30, 40) according to Claim 6,
**characterized in that**
the analysis unit is configured in such a way that,
• by means of the first sensor (25, 35, 45a, 45b, 75a, 75b), an intensity-dependent signal curve is acquirable and/or during a rotation of the first beam guiding unit (77a, 77b), a signal intensity is determinable and/or storable in dependence on a respective yaw alignment of the first beam guiding unit (77a, 77b), in particular in dependence on an encoder signal,
and/or
• the yaw angle (β) is derivable in dependence on the determination of the alignment of the detection field of view (56a, 56b), in particular wherein the yaw angle (β) is determinable by means of signal analysis, in particular by means of analysis of the intensity curve, and/or
• a pitch angle is derivable on the basis of a time or rotation-angle-related distance of two measurement signal acquisitions during a rotation of the first beam guiding unit (77a, 77b) of less than 360°.

8. Reflector arrangement (20, 30, 40) according to any one of the preceding claims,
**characterized in that**
the retroreflector (21, 31, 41a, 41b) is designed as a prism, in particular a triple prism, and the prism comprises
• a light entry surface (22, 32) forming a polygon, in particular a triangle and
• the passage surface (23, 33) opposite to the light entry surface (22, 32) as an aperture,
in particular wherein
• the passage surface (23, 33) is formed at a corner of the prism, in particular wherein the passage surface (23, 33) is formed by an omitted corner of the prism and also defines a polygon, in particular a triangle, and/or
• the retroreflector (21, 31, 41a, 41b) defines an optical axis (27, 47), wherein the optical axis (27, 47) extends orthogonally to the passage surface (23, 33) and in particular intersects the center point of the passage surface (23, 33).

9. Reflector arrangement (20, 30, 40) according to any one of the preceding claims,
**characterized in that**
the reflector arrangement (20, 30, 40) is designed as a 360° retroreflector having a plurality, in particular having six, retroreflectors (21, 31, 41a, 41b) which adjoin one another, are designed as prisms and are designed according to Claim 8, wherein
• the plurality of the prisms are arranged in a ring shape, in particular form a ring, and
• the 360° retroreflector defines an overall field of view around the yaw axis (β) of 360°,
in particular wherein the optical axes of at least two, in particular three, prisms have a shared point of intersection with the yaw axis (46).

10. Reflector arrangement (20, 30, 40) according to Claim 9,
**characterized in that**
the plurality of the retroreflectors (21, 31, 41a, 41b) is arranged in such a way that
• the reflector arrangement (20, 30, 40) comprises a central outlet, wherein the yaw axis (46) extends centrally through the outlet,
• the beam detection unit (50) is at least partially arranged in the outlet, and
• the beam detection unit (50) is designed for angle-of-incidence-dependent acquisition of the orientation measurement radiation passing through an arbitrary one of the passage surfaces (23, 33) of the retroreflectors (21, 31, 41a, 41b) over the overall field of view of 360°.

11. Reflector arrangement (20, 30, 40) according to any one of the preceding claims,
**characterized in that**
the beam detection unit (50) comprises a second beam guiding unit (77b) and a second sensor (25, 35, 45a, 45b, 75a, 75b), wherein the first beam guiding unit (77a) is associated with a first prism group (A1-A3) and the second beam guiding unit (77b) is associated with a second prism group (B1-B3), in particular wherein
• the first and the second prism groups (A1-A3, B1-B3) each comprise three prisms and/or
• the first and the second beam guiding unit (77a, 77b) are arranged in the outlet.

12. Reflector arrangement (20, 30, 40) according to Claim 11,
**characterized in that**
• the first prism group (A1-A3) and the first beam guiding unit (77a) provide an acquisition of the orientation measurement radiation, which can be provided by the first prism group (A1-A3) and is projectable by means of the first beam guiding unit (77a) on the first sensor (45a, 75a), by the first sensor (45a, 75a), and
• the second prism group (B1-B3) and the second beam guiding unit (77b) provide an acquisition of the orientation measurement radiation, which can be provided by the second prism group (B1-B3) and is projectable by means of the second beam guiding unit (77b) on the second sensor (45b, 75b), by the second sensor (45b, 75b),
in particular wherein
• the center points of the passage surfaces of the prisms of the first prism group (A1-A3) are in a first plane, the center points of the passage surfaces of the prisms of the second prism group (B1-B3) are in a second plane and the first plane and the second plane are aligned in parallel to one another and have a defined distance, in particular wherein the planes are substantially orthogonal to the yaw axis, and/or
• the prisms of the first prism group (A1-A3) and prisms of the second prism group (B1-B3) are tilted oppositely, in particular equally in absolute value, in relation to a plane aligned orthogonally to the yaw axis.

13. Reflector arrangement (20, 30, 40) according to any one of Claims 1 to 10,
**characterized in that**
the beam detection unit (50) comprises a second beam guiding unit (77b) and a second sensor (25, 35, 45a, 45b, 75a, 75b), wherein
• both the first and also the second beam guiding unit (77a, 77b) are arranged and designed for the angle-of-incidence-dependent acquisition of the orientation measurement radiation passing through an arbitrary one of the passage surfaces (23, 33) of the retroreflectors (21, 31, 41a, 41b) over the overall field of view of 360°,
• the first and the second beam guiding unit (77a, 77b) each comprise a beam deflection means (24, 34, 54a, 54b, 74a, 74b) and each comprise a slotted beam passage (51a, 51b, 71a, 71b), wherein 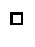
both the first and the second beam deflection means (24, 34, 54a, 54b, 74a, 74b) and also the first and the second slotted beam passage (51a, 51b, 71a, 71b) are arranged and aligned at a yaw distance of in each case 180° in relation to one another, 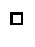
a slot extension axis defined by the respective slotted beam passage (51a, 51b, 71a, 71b) is tilted with respect to the yaw axis around an axis parallel or coaxial to a roll axis, in particular by an angle from an angle range of 30° to 60°, in particular by 45°, wherein the roll axis is aligned orthogonally to both the yaw axis and also the pitch axis, 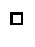
an alignment of the beam deflection means (24, 34, 54a, 54b, 74a, 74b) resulting due to a projection of the respective beam deflection means (24, 34, 54a, 54b, 74a, 74b) on a plane defined by the yaw axis and pitch axis is tilted with respect to the yaw axis around the axis parallel or coaxial to the roll axis, in particular by an angle from an angle range of 30° to 60°, in particular by 45°,
□ the tilts of the first beam passage (51a, 71a) and of the first beam deflection means (54a, 74a) are identical in absolute value and direction and
□ the tilts of the second beam passage (51b, 71b) and of the second beam deflection means (54b, 74b) are identical in absolute value and direction, in particular wherein the tilts of the first and second beam passage (51a, 51b, 71a, 71b) and of the first and second beam deflection means (54a, 54b, 74a, 74b) are identical at least with respect to direction around the axis parallel or coaxial to the roll axis.

14. Measurement aid instrument (10), in particular a pole, surveying rod, or sampling tool, having a reflector arrangement (20, 30, 40) according to any one of Claims 1 to 13, wherein the measurement aid instrument (10) is designed for the contactless or tactile acquisition of a target point on an object having defined position relationship to the reflector arrangement (20, 30, 40).

## Revendications

1. Dispositif réflecteur (20, 30, 40) pour la détermination de position et/ou le marquage de points cibles, en particulier pour l'arpentage industriel ou géodésique, comprenant au moins :
• un rétroréflecteur (21, 31, 41a, 41b), qui 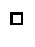
fournit une détermination de position pour le dispositif réflecteur (20, 30, 40) au moyen d'une réflexion de faisceau de mesure parallèle, en particulier coaxiale, 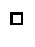
fournit une surface de passage (23, 33) pour au moins une partie du rayonnement de mesure (5, 28) entrant dans le rétroréflecteur (21, 31, 41a, 41b) comme rayonnement de mesure d'orientation et 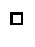
fournit un champ de vision de réflecteur avec un premier angle d'ouverture autour d'un axe de lacet (46) et un deuxième angle d'ouverture autour d'un axe de tangage orthogonal à l'axe de lacet (46), et
• une unité de détection de faisceau (50, 70), au moyen de laquelle le rayonnement de mesure d'orientation traversant le rétroréflecteur (21, 31, 41a, 41b) peut être détecté,
dans lequel une orientation spatiale du dispositif réflecteur (20, 30, 40) peut être définie à l'aide d'une orientation d'un système de coordonnées propre au corps, défini par au moins l'axe de lacet (46), par rapport à un système de coordonnées externe au moins à l'aide d'un angle de lacet relatif (β), l'angle de lacet (β) indiquant une orientation rotative du dispositif réflecteur autour de l'axe de lacet (46),
dans lequel l'unité de détection de faisceau (50, 70) présente :
• un premier capteur (25, 35, 45a, 45b, 75a, 75b) pour générer un signal en fonction d'une détection de rayonnement de mesure d'orientation et
• une première unité de guidage de faisceau (77a, 77b), dans lequel le premier capteur (25, 35, 45a, 45b, 75a, 75b) et la première unité de guidage de faisceau sont disposés de telle sorte que
• par une coopération de la première unité de guidage de faisceau (77a, 77b) et du premier capteur (25, 35, 45a, 45b, 75a, 75b), un champ de vision de détection (56a, 56b) pour la détection du rayonnement de mesure d'orientation est défini, lequel présente un angle d'ouverture autour de l'axe de lacet qui est inférieur au premier angle d'ouverture du champ de vision de réflecteur,
• une orientation du champ de vision de détection (56a, 56b) autour de l'axe de lacet (46) peut être modifiée au moyen d'un pivotement ou d'une rotation de la première unité de guidage de faisceau (77a, 77b) autour de l'axe de lacet (46) et
• le rayonnement de mesure d'orientation traversant le rétroréflecteur (21, 31, 41a, 41b) peut être détecté en fonction de l'orientation du champ de vision de détection avec le premier capteur (25, 35, 45a, 45b, 75a, 75b), et dans lequel la première unité de guidage de faisceau (77a, 77b) définit un axe de rotation (26, 36, 46),
dans lequel la première unité de guidage de faisceau (77a, 77b) est montée de manière à pouvoir tourner autour de l'axe de rotation (26, 36, 46) pour faire varier l'orientation du champ de vision de détection (56a, 56b) et fournit une détection du rayonnement de mesure d'orientation dépendant de l'angle de rotation.

2. Dispositif réflecteur (20, 30, 40) selon la revendication 1,
**caractérisé en ce que**
la première unité de guidage de faisceau (77a, 77b) présente au moins un passage de faisceau (51a, 51b, 71a, 71b), lequel passage de faisceau (51a, 51b, 71a, 71b) est réalisé sous la forme d'une ouverture allongée, en particulier disposée de manière à s'étendre parallèlement à l'axe de lacet et/ou configurée en forme de fente, en particulier dans lequel le passage de faisceau (51a, 51b, 71a, 71b) est réalisé sous forme de cylindre creux avec une surface de base circulaire et un évidement, en particulier une fente, dans la paroi de cylindre, fournissant la transmission de faisceau, un centre du cylindre creux étant situé sur l'axe de lacet (46) ou un axe de cylindre du cylindre creux étant coaxial à l'axe de lacet (46).

3. Dispositif réflecteur (20, 30, 40) selon l'une des revendications précédentes, **caractérisé en ce que**
le dispositif réflecteur (20, 30, 40), en particulier la première unité de guidage de faisceau (77a, 77b), présente un moyen de déviation de faisceau (24, 34, 54a, 54b, 74a, 74b) réalisé et disposé pour dévier et/ou focaliser le faisceau passant à travers la surface de passage (23, 33), en particulier à travers le passage de faisceau, sur le premier capteur (25, 35, 45a, 45b, 75a, 75b), en particulier un corps avec une surface de forme libre réfléchissante du troisième ordre.

4. Dispositif réflecteur (20, 30, 40) selon l'une des revendications précédentes, **caractérisé en ce que**
le premier capteur (25, 35, 45a, 45b, 75a, 75b) est réalisé pour générer le signal
• en fonction d'une intensité du rayonnement de mesure d'orientation atteignant le premier capteur (25, 35, 45a, 45b, 75a, 75b), en particulier sous la forme d'un capteur photosensible.

5. Dispositif réflecteur (20, 30, 40) selon l'une des revendications précédentes, **caractérisé en ce que**
le dispositif réflecteur (20, 30, 40)
• présente une unité d'entraînement (39, 49) qui fournit un pivotement et/ou une rotation commandés de la première unité de guidage de faisceau (77a, 77b) autour de l'axe de rotation (26, 36, 46) ou de l'axe de lacet et/ou
• présente une unité de codage qui est réalisée pour détecter l'orientation du champ de vision de détection (56a, 56b), l'unité de codage étant en particulier couplée à la première unité de guidage de faisceau (77a, 77b), à l'unité d'entraînement (39, 49) et/ou à l'axe de rotation (26, 36, 46).

6. Dispositif réflecteur (20, 30, 40) selon l'une des revendications précédentes, **caractérisé en ce que**
le dispositif réflecteur (20, 30, 40) présente une unité d'évaluation qui est conçue pour déterminer l'orientation du champ de vision de détection (56a, 56b) en fonction d'un signal du premier capteur (25, 35, 45a, 45b, 75a, 75b).

7. Dispositif réflecteur (20, 30, 40) selon la revendication 6,
**caractérisé en ce que**
l'unité d'évaluation est configurée de telle sorte que :
• une courbe de signal dépendant de l'intensité peut être détectée au moyen du premier capteur (25, 35, 45a, 45b, 75a, 75b) et/ou, lors d'une rotation de la première unité de guidage de faisceau (77a, 77b), une intensité de signal peut être déterminée et/ou mémorisée en fonction d'une orientation de lacet respective de la première unité de guidage de faisceau (77a, 77b), en particulier en fonction d'un signal de codeur, et/ou
• l'angle de lacet (β) peut être déduit en fonction de la détermination de l'orientation du champ de vision de détection (56a, 56b), l'angle de lacet (β) pouvant en particulier être déterminé au moyen d'une évaluation de signal, en particulier au moyen d'une évaluation de la courbe d'intensité, et/ou
• un angle de tangage peut être déduit à l'aide d'une distance temporelle ou relative à l'angle de rotation de deux détections de signaux de mesure lors d'une rotation de la première unité de guidage de faisceau (77a, 77b) de moins de 360°.

8. Dispositif réflecteur (20, 30, 40) selon l'une des revendications précédentes, **caractérisé en ce que**
le rétroréflecteur (21, 31, 41a, 41b) est réalisé sous la forme d'un prisme, en particulier un triple prisme, et le prisme présente
• une surface d'entrée de lumière (22, 32) formant un polygone, en particulier un triangle, et
• la surface de passage (23, 33) opposée à la surface d'entrée de lumière (22, 32) présente une ouverture,
en particulier dans lequel
• la surface de passage (23, 33) est formée à un coin du prisme, la surface de passage (23, 33) étant en particulier formée par un coin évidé du prisme et définissant également un polygone, en particulier un triangle, et/ou
• le rétroréflecteur (21, 31, 41a, 41b) définit un axe optique (27, 47), l'axe optique (27, 47) étant orthogonal à la surface de passage (23, 33) et coupant en particulier le centre de la surface de passage (23, 33).

9. Dispositif réflecteur (20, 30, 40) selon l'une des revendications précédentes, **caractérisé en ce que**
le dispositif réflecteur (20, 30, 40) est réalisé sous la forme d'un rétroréflecteur à 360° avec une pluralité, en particulier avec six rétroréflecteurs (21, 31, 41a, 41b) disposés de manière contiguë et réalisés sous la forme de prismes, qui sont réalisés selon la revendication 8, dans lequel
• la pluralité de prismes sont disposés en forme d'anneau, en particulier forment un anneau, et
• le rétroréflecteur à 360° définit un champ de vision total autour de l'axe de lacet (β) de 360°,
en particulier dans lequel les axes optiques d'au moins deux, en particulier de trois prismes présentent un point d'intersection commun avec l'axe de lacet (46).

10. Dispositif réflecteur (20, 30, 40) selon la revendication 9,
**caractérisé en ce que**
la pluralité de rétroréflecteurs (21, 31, 41a, 41b) sont disposés de telle sorte que :
• le dispositif réflecteur (20, 30, 40) présente une lacune centrale, l'axe de lacet (46) s'étendant de manière centrale à travers la lacune,
• l'unité de détection de faisceau (50) est disposée au moins partiellement dans la lacune, et
• l'unité de détection de faisceau (50) est réalisée pour détecter, en fonction de l'angle d'incidence, le rayonnement de mesure d'orientation traversant l'une quelconque des surfaces de passage (23, 33) des rétroréflecteurs (21, 31, 41a, 41b) sur le champ de vision total de 360°.

11. Dispositif réflecteur (20, 30, 40) selon l'une des revendications précédentes, **caractérisé en ce que**
l'unité de détection de faisceau (50) présente une deuxième unité de guidage de faisceau (77b) et un deuxième capteur (25, 35, 45a, 45b, 75a, 75b), la première unité de guidage de faisceau (77a) étant associée à un premier groupe de prismes (A1-A3) et la deuxième unité de guidage de faisceau (77b) étant associée à un deuxième groupe de prismes (B1-B3), en particulier dans lequel
• le premier et le deuxième groupe de prismes (A1-A3, B1-B3) présentent chacun trois prismes et/ou
• la première et la deuxième unité de guidage de faisceau (77a, 77b) sont disposées dans la lacune.

12. Dispositif réflecteur (20, 30, 40) selon la revendication 11,
**caractérisé en ce que**
• le premier groupe de prismes (A1-A3) et la première unité de guidage de faisceau (77a) fournissent une détection par le premier capteur (45a, 75a) du rayonnement de mesure d'orientation pouvant être fourni par le premier groupe de prismes (A1-A3) et pouvant être projeté sur le premier capteur (45a, 75a) au moyen de la première unité de guidage de faisceau (77a) ; et
• le deuxième groupe de prismes (B1-B3) et la deuxième unité de guidage de faisceau (77b) fournissent une détection par le deuxième capteur (45b, 75b) du rayonnement de mesure d'orientation pouvant être fourni par le deuxième groupe de prismes (B1-B3) et pouvant être projeté sur le deuxième capteur (45b, 75b) au moyen de la deuxième unité de guidage de faisceau (77b),
en particulier dans lequel
• les centres des surfaces de passage des prismes du premier groupe de prismes (A1-A3) sont situés dans un premier plan, les centres des surfaces de passage des prismes du deuxième groupe de prismes (B1-B3) sont situés dans un deuxième plan, et le premier plan et le deuxième plan sont orientés parallèlement l'un à l'autre et présentent une distance déterminée, les plans étant en particulier sensiblement orthogonaux à l'axe de lacet, et/ou
• les prismes du premier groupe de prismes (A1-A3) et les prismes du deuxième groupe de prismes (B1-B3) sont inclinés de manière opposée, en particulier d'une manière égale en valeur, par rapport à un plan orienté orthogonalement à l'axe de lacet.

13. Dispositif réflecteur (20, 30, 40) selon l'une des revendications 1 à 10, **caractérisé en ce que** l'unité de détection de faisceau (50) présente une deuxième unité de guidage de faisceau (77b) et un deuxième capteur (25, 35, 45a, 45b, 75a, 75b), dans lequel
• aussi bien la première que la deuxième unité de guidage de faisceau (77a, 77b) sont disposées et réalisées pour détecter, en fonction de l'angle d'incidence, le rayonnement de mesure d'orientation traversant l'une quelconque des surfaces de passage (23, 33) des rétroréflecteurs (21, 31, 41a, 41b) sur le champ de vision total de 360°,
• la première et la deuxième unité de guidage de faisceau (77a, 77b) présentent chacune un moyen de déviation de faisceau (24, 34, 54a, 54b, 74a, 74b) et chacune un passage de faisceau en forme de fente (51a, 51b, 71a, 71b), dans lequel 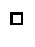
aussi bien le premier et le deuxième moyen de déviation de faisceau (24, 34, 54a, 54b, 74a, 74b) que le premier et le deuxième passage de faisceau en forme de fente (51a, 51b, 71a, 71b) sont disposés et orientés l'un par rapport à l'autre avec un écart de lacet de chaque fois 180°,
□ un axe d'extension de fente défini par le passage de faisceau en forme de fente respectif (51a, 51b, 71a, 71b) est incliné autour d'un axe parallèle ou coaxial à un axe de roulis par rapport à l'axe de lacet, en particulier d'un angle compris dans une plage angulaire de 30° à 60°, en particulier de 45°, l'axe de roulis étant orienté orthogonalement aussi bien à l'axe de lacet qu'à l'axe de tangage,
□ une orientation du moyen de déviation de faisceau (24, 34, 54a, 54b, 74a, 74b) résultant d'une projection du moyen de déviation de faisceau respectif (24, 34, 54a, 54b, 74a, 74b) sur un plan défini par l'axe de lacet et l'axe de tangage est inclinée autour de l'axe parallèle ou coaxial à l'axe de roulis par rapport à l'axe de lacet, en particulier d'un angle compris dans une plage angulaire de 30° à 60°, en particulier de 45°,
□ les inclinaisons du premier passage de faisceau (51a, 71a) et du premier moyen de déviation de faisceau (54a, 74a) sont égales en valeur et en direction, et
□ les inclinaisons du deuxième passage de faisceau (51b, 71b) et du deuxième moyen de déviation de faisceau (54b, 74b) sont égales en valeur absolue et en direction,
en particulier, les inclinaisons du premier et du deuxième passage de faisceau (51a, 51b, 71a, 71b) et du premier et du deuxième moyen de déviation de faisceau (54a, 54b, 74a, 74b) étant égales au moins en direction autour de l'axe parallèle ou coaxial à l'axe de roulis.

14. Instrument de mesure (10), en particulier canne à plomber, jalon d'arpentage ou outil de palpage, comprenant un dispositif réflecteur (20, 30, 40) selon l'une des revendications 1 à 13, l'instrument de mesure (10) étant réalisé pour la détection sans contact ou tactile d'un point cible sur un objet avec une référence de position définie par rapport au dispositif réflecteur (20, 30, 40).
